# EUROPÄISCHE PATENTSCHRIFT

(11) **EP 3 218 794 B1**
(45) Veröffentlichungstag und Bekanntmachung des Hinweises auf die Patenterteilung: **24.03.2021**
(21) Anmeldenummer: 15797014.6
(22) Anmeldetag: 11.11.2015
(51) Int. Cl.: G06F 3/14, H04N 9/31, H04N 9/73, H05B 33/08, H04N 9/74, H05B 45/00, H05B 45/22, G07F 17/32, G06F 1/16, G09F 9/302, G09G 3/34, H05B 45/20

(54) **ANZEIGEVORRICHTUNG UND VERFAHREN ZUM BETREIBEN EINER SOLCHEN ANZEIGEVORRICHTUNG**
DISPLAY DEVICE AND METHOD OF OPERATING THE SAME
DISPOSITIF D'AFFICHAGE ET SON PROCÉDÉ DE FONCTIONNEMENT

(30) Priorität: 11.11.2014 DE 102014016643
(43) Veröffentlichungstag der Anmeldung: 20.09.2017
(73) Patentinhaber: Novomatic AG, 2352 Gumpoldskirchen (AT)
(72) Erfinder: GAWEL, Marek, 2352 Gumpoldskirchen (AT); HOMER, Alois, 2352 Gumpoldskirchen (AT)
(74) Vertreter: Thoma, Michael
(86) Internationale Anmeldenummer: PCT/EP2015/002271
(87) Internationale Veröffentlichungsnummer: WO 2016/074795

(56) Entgegenhaltungen:
- CN-A- 102 339 565
- US-A1- 2009 167 192
- US-A1- 2010 213 877

## Beschreibung

Die vorliegende Erfindung betrifft eine Anzeigevorrichtung mit zumindest einer Anzeigeeinheit sowie einer Beleuchtungsvorrichtung insbesondere zum Beleuchten der Umgebung eines Randbereichs der zumindest einen Anzeigeeinheit. Die Erfindung betrifft ferner ein Verfahren zum Betreiben einer solchen Anzeigevorrichtung sowie einen Unterhaltungsautomaten mit einer solchen Anzeigevorrichtung.

Bei Unterhaltungsautomaten wie beispielsweise Glücksspielgeräten, Wettterminals und anderen Unterhaltungsgeräten oder auch bei großflächigen Anzeigevorrichtungen wie Public Viewing-Displays oder Konferenzraumdisplays ist es bisweilen vorteilhaft, anstelle einer einzigen, großflächigen Anzeigeeinheit mehrere separat ausgebildete Anzeigeeinheiten zu verwenden, die nebeneinander oder übereinander angeordnet sind. Hierdurch können mit an sich Standardformat aufweisenden Anzeigeeinheiten auch andersformatige Anzeigevorrichtungen geschaffen werden, ohne hierfür teuere Spezialanfertigungen verwenden zu müssen. Zum anderen können beispielsweise bei Unterhaltungsautomaten mehrere separate, eigenständig betreibbare Anzeigeeinheiten auch von Vorteil sein, um unterschiedliche Bildinhalte ohne aufwändige Splitscreen-Ansteuerung eines einzelnen Bildschirms darstellen zu können, beispielsweise um auf einer Anzeigeeinheit einen Spielinhalt und auf einer anderen Anzeigeeinheit Zusatzinformationen wie Spieleinsatz, Spielregeln und dergleichen oder auch einen zweiten Spielinhalt - beispielsweise ein Zusatzspiel - präsentieren zu können.

Die Anzeigeeinheiten selbst können hierbei jeweils an sich eigenständige Baugruppen bilden, die voneinander unabhängig montierbare bzw. austauschbare Anzeige-Baugruppen bilden und/oder unabhängig voneinander ausgebildete Stromversorgungsteile und/oder voneinander unabhängig ausgebildete Steuerungsbausteine besitzen, die die Anzeigeelemente, die auf der jeweiligen Anzeigeeinheit generiert werden, steuern. Im Kontext der vorliegenden Anmeldung kann eine Anzeigeeinheit insbesondere ein Bildschirm sein, wobei ein eine Anzeigeeinheit bildender Bildschirm flach im Sinne eines herkömmlichen Flatscreen-Bildschirms oder gebogen im Sinne eines elektronischen Bildschirms, der beispielsweise Walzen nachbildet, ausgebildet sein kann.

Separate Anzeigeeinheiten sind im Kontext der vorliegenden Erfindung daher insbesondere eigenständig funktionsfähige Anzeige-Baugruppen, die unabhängig voneinander sichtbare bzw. wahrnehmbare Anzeigeflächen besitzen und jeweils eine eigene räumlich-körperlich definierte Gestalt aufweisen, beispielsweise mittels eines Rahmens oder einem Gehäuse abgegrenzt sein können. Die Anzeigefelder der separaten Anzeigeeinheiten können quer zur Betrachtungsrichtung versetzt nebeneinander und/oder übereinander und ggf. auch voneinander beabstandet angeordnet sein, wobei die vom Betrachterplatz oder Gerätebedienplatz aus sichtbaren Anzeigefelder bzw. Anzeigefeld- oder Bildausschnitte der separaten Anzeigeeinheiten vorzugsweise außerhalb voneinander liegen, insbesondere dergestalt, dass ein vom Gerätebedienplatz aus sichtbares Anzeigefeld bzw. Bildausschnitt einer Anzeigeeinheit außerhalb des Anzeigefelds bzw. Bildausschnitts der jeweils anderen Anzeigeeinheit liegt.

Bei solchen separaten Anzeigeeinheiten können allerdings die dargestellten Bildinhalte bzw. die Anzeigeflächen oft nicht spaltfrei Stoß an Stoß gesetzt werden, sondern es verbleibt zwischen den darstellbaren Bildinhalten bzw. den Anzeigeflächen ein spaltförmiger Zwischenraum, so dass dem Betrachter die Aufteilung in separate Anzeigeeinheiten deutlich sichtbar bleibt und kein für die visuelle Wahrnehmung angenehmer, harmonischer Übergang zwischen den Bildinhalten vorhanden ist, was ggf. auch zu Ermüdungserscheinungen beim Betrachter und dessen Augen führen kann. Ein solcher Spalt zwischen den separaten Anzeigeeinheiten resultiert im Wesentlichen daraus, dass die separaten Anzeigeeinheiten oft Rahmen besitzen, die die eigentliche Anzeigefläche, auf der Bildinhalte darstellbar sind, rundherum einfassen, so dass die Anzeigefläche nicht bis ganz an die Umfangsbegrenzung der Anzeigeeinheit heranreicht. Da die Anzeigeeinheiten auch separate Gehäuse besitzen, ergibt sich auch durch den Platzbedarf für die Gehäusewandungen eine gewisse Beabstandung der Anzeigeeinheiten bzw. deren Anzeigeflächen.

Bei Spielautomaten wurde bereits vorgeschlagen, die Anzeigeeinheiten hintereinander gestaffelt anzuordnen, vgl. beispielsweise WO 2009/033615, wodurch der Kanten- bzw. Randbereich des hinteren Bildschirms verdeckt und nicht mehr sichtbar ist. Gleichwohl verbleibt jedoch der Randbereich der vorderen Bildschirme als Sichtbarriere bzw. Beabstandung zwischen den Anzeigeflächen.

Bei Fernsehgeräten wurde bereits vorgeschlagen, die tatsächliche Anzeigefläche größer erscheinen zu lassen, indem an den Rändern des Bildschirms Lichtquellen angeordnet werden, die auf eine hinter dem Bildschirm liegende Wand strahlen und diese farbig ausleuchten, so dass der Bildschirm nach Art eines Heiligenscheins eine Lichteinfassung erhält. Diese bisweilen als "ambient light" bezeichnete Umfangsbeleuchtung ist insbesondere bei einer Wandmontage von Flachbildschirmen wirksam, da die Lichtquellen hinter den Bildschirmrändern versteckt werden können, so dass der Betrachter nicht direkt in die Lichtquellen blicken kann. Um den virtuellen Vergrößerungseffekt einer solchen Beleuchtung zu verstärken, wird dabei die Lichtfarbe des auf die Wand abgestrahlten Lichts an die Bildschirmdarstellung, d.h. die vorherrschende Farbe in den Randbereichen der Anzeigefläche des Bildschirms angepasst, vgl. WO 2008/142639 A1 und EP 1379082 B1. Aus der EP 1994801 ist es zudem bekannt, hierbei nicht nur die Farben von vorbestimmten Bildblöcken, die auf der. Anzeigefläche dargestellt werden, zu berücksichtigen, sondern auch unterschiedlich zu werten bzw. zu gewichten, um die Farbe der Umgebungsbeleuchtung stärker an wichtigere Bildblöcke anpassen zu können. Hierfür werden aus den Bildsignalen, mit denen der Bildschirm angesteuert wird, sich bewegende Objekte in der Bildschirmdarstellung identifiziert, um deren Farbe für die Umgebungsbeleuchtung anders berücksichtigen zu können.

Da in einem bestimmten Bildblock eines Bildschirms regelmäßig nicht nur eine Farbe angezeigt wird, kann aus der Vielzahl der dargestellten Farben eine Durchschnitts-Farbe gebildet werden oder es kann ein den Bildblock charakterisierendes Farbspektrum bestimmt werden, wie dies beispielsweise die DE 10 2007 004 834 A1 zeigt. Dabei werden die von einzelnen Lichtquellen bzw. Pixeln abgegebenen Lichtspektren erfasst und individuell so eingeregelt, dass ein resultierendes Gesamtspektrum einem gewünschten Lichtspektrum und damit einer gewünschten Farbe zumindest näherungsweise entspricht.

Aus der WO 2007/113754 ist es ferner bekannt, die Umgebung eines Bildschirms nicht nur diffus farbig zu beleuchten, sondern dabei Lichtmuster zu erzeugen, die an die Bildschirmdarstellung angepasst sind.

Ferner zeigt die Schrift US 2010/0213877 A1 einen Bildschirm mit randseitig angeordneten Leuchtmitteln, die durch Analyse des Videosignals, das auf dem Bildschirm angezeigt wird, angesteuert werden. Weiterhin zeigt die Schrift CN 102339565A eine Anzeigevorrichtung nach dem Oberbegriff des Anspruchs 1, bei der an den Randseitig angeordneten LEDs Fotodetektoren angeordnet sind, um am Bildschirmrand herrschende Lichtverhältnisse zu detektieren und in Abhängigkeit hiervon die LEDs anzusteuern. Bei der US 2009/0167192 A1 sind fotoelektrische Sensoren zusammen mit LEDs oder ähnlichen Lichtquellen in einen den Bildschirm umgebenden, transparenten Rahmen eingebettet, sind fotoelektrische Sensoren zusammen mit LEDs oder ähnlichen Lichtquellen in einen den Bildschirm umgebenden, transparenten Rahmen eingebettet.

Der vorliegenden Erfindung liegt die Aufgabe zugrunde, eine verbesserte Anzeigevorrichtung, einen verbesserten Unterhaltungsautomaten mit einer solchen Anzeigevorrichtung sowie ein verbessertes Verfahren der eingangs genannten Art zu schaffen, die Nachteile des Standes der Technik vermeiden und Letzteren in vorteilhafter Weise weiterzubilden. Insbesondere soll ein möglichst fließender, harmonischer visueller Übergang zwischen der Anzeigeneinheit und der ergänzenden Rand- bzw. Umgebungsbeleuchtung erreicht werden,- ohne hierfür in die komplexe

Anzeigeneinheit eingreifen zu müssen, und ein einfaches Nachrüsten der ergänzenden Umgebungsbeleuchtung ermöglicht werden.

Erfindungsgemäß wird die genannte Aufgabe durch eine Anzeigevorrichtung gemäß Anspruch 1, einen Unterhaltungsautomaten gemäß Anspruch 15 sowie ein Verfahren gemäß Anspruch 16 gelöst. Bevorzugte Ausgestaltungen der Erfindung sind Gegenstand der abhängigen Ansprüche.

Es wird also vorgeschlagen, die Anzeigefläche der zumindest einen Anzeigeeinheit, insbesondere die an den Rand der Anzeigeeinheit angrenzenden Randbereiche der Anzeigefläche, hinsichtlich der dort dargestellten Farben zu untersuchen und daraus Farbinformationen zu gewinnen. Anhand dieser Farbinformationen wird dann die Farbe des abgegebenen Lichts der Beleuchtungsvorrichtung, mittels derer der Übergangsbereich zwischen der zumindest einen Anzeigeeinheit und deren Umgebung beleuchtet wird, gesteuert. Durch Berücksichtigung der Anzeigenfläche, insbesondere der Randbereiche, der zumindest einen oder aller Anzeigeeinheiten und der dort dargestellten Bildfarben kann der Übergangsbereich zwischen Anzeigeeinheit und Umgebung farblich harmonisch zu der jeweils angrenzenden Anzeigefläche beleuchtet werden. Die erfindungsgemäße Anzeigevorrichtung umfasst neben der zumindest einen Anzeigeeinheit und der Beleuchtungsvorrichtung zumindest eine Bestimmungseinrichtung zum Bestimmen einer Farbinformation aus einem Bildblock der zumindest einen Anzeigeeinheit, sowie ferner eine Farbsteuereinrichtung zum Steuern der Farbe und/oder des Farbspektrums des von der Beleuchtungsvorrichtung abgegebenen Lichts in Abhängigkeit der Farbinformation.

Ein solcher Bildblock der Anzeigeeinheit kann insbesondere ein konturmäßig definierter Teilbereich der Anzeigefläche der jeweiligen Anzeigeeinheit vorzugsweise in der Nähe des Rands der Anzeigeeinheit, der sich benachbart zu einem weiteren angrenzenden Bildschirm erstreckt, sein. Vorzugsweise kann ein Bildblock ein zumindest näherungsweise rechteckiges Gebiet der jeweiligen Anzeigeeinheit in der Nähe zu oder angrenzend an den Außenrand der jeweiligen Anzeigeeinheit sein, in welchem Gebiet ein Bild- und/oder Videosignal - insbesondere in Pixelblöcken oder -punkten - anzeigbar ist. Im einfachsten Fall kann ein derartiger Bildblock die gesamte Anzeigefläche der jeweiligen Anzeigeeinheit umfassen. Ein solcher Bildblock kann jedoch auch deutlich kleiner als die Anzeigefläche der Anzeigeeinheit sein, beispielsweise weniger als 50% oder auch weniger als 25% der Anzeigefläche der Anzeigeeinheit flächenmäßig betragen.

Die Farbsteuereinrichtung steuert die Beleuchtungsvorrichtung automatisch in Abhängigkeit von Farbinformationen aus der zumindest einen Anzeigeeinheit an. Hierdurch kann ein harmonischer, fließender Übergang zwischen der zumindest einen Anzeigeeinheit und der Umgebung erreicht werden, der die Abgrenzung der Anzeigeeinheit zur Umgebung optisch mildert bzw. die optische Trennung näherungsweise aufhebt, so dass das Auge eines Betrachters weniger sprunghaft und damit ermüdungsfreier zwischen der Anzeigefläche der Anzeigeeinheit und der Umgebung hin und her wandern kann. Die Farbinformationen aus der zumindest einen Anzeigeeinheit werden von zumindest einer Bestimmungeinrichtung ermittelt. Die zumindest eine Bestimmungseinrichtung und die Farbsteuereinrichtung können beispielsweise funktionell und/oder physisch zu einer Steuereinheit oder Steuervorrichtung zusammengefasst sein. Die zumindest eine Bestimmungseinrichtung und die Farbsteuereinrichtung können aber auch als getrennte Einheiten ausgeführt sein.

In vorteilhafter Weiterbildung der Erfindung kann die den Bildblock der zumindest einen Anzeigeeinheit charakterisierende Farbinformation aus dem von der Anzeigeeinheit insbesondere in dem genannten Bildblock - abgestrahlten Licht gewonnen werden. Hierfür weist die Anzeigevorrichtung einen Lichteinfänger beziehungsweise eine Lichterfassungseinrichtung auf, der/die von der Anzeigeeinheit abgegebenes Licht einfängt beziehungsweise erfasst und an die Bestimmungseinrichtung leitet, sodass die Bestimmungseinrichtung die genannte Farbinformation gewinnen kann. Durch die Bestimmung der genannten Farbinformation aus dem tatsächlich abgegebenen Licht muss nicht in die üblicherweise komplexe Ansteuerung der Bildschirme eingegriffen werden und es brauchen keine Steuersignale, die die Bildanzeige auf der Anzeeinheit generieren beziehungsweise steuern, abgegriffen werden, so dass auch eine Nachrüstung der zusätzlichen Beleuchtungsvorrichtung und deren Steuerung in einfacher Weise ermöglicht wird. Zudem können Abweichungen zwischen den Ansteuersignalen und der tatsächlich abgegebenen Lichtfarbe, die beispielsweise in Folge von Verschleiß der Leuchtmittel der Anzeigeeinheit entstehen können, reduziert werden, da die Farbinformation unmittelbar aus dem Ist-Signal beziehungsweise dem Ist-Zustand des abgegebenen Anzeigelichts gewonnen wird.

Ein solcher Lichteinfänger weist vorteilhafterweise einen begrenzten Beobachtungsbeziehungsweise Einfangbereich auf, um gezielt das von einem interessierenden Bildblock der Anzeigeeinheit abgegebene Licht beziehungsweise dessen Lichtspektrum einzufangen. Der genannte Beobachtungsbereich ist dabei insbesondere kleiner als die gesamte Anzeigefläche der Anzeigeeinheit, so dass nur Licht von einer Teilfläche der Anzeigefläche, insbesondere von einem Randabschnitt der Anzeigefläche eingefangen wird. Beispielsweise kann der Beobachtungsbereich auf den interessierenden Bildblock begrenzt, also kleiner oder gleich diesem Bildblock sein. Vorteilhafterweise ist der Lichteinfänger beziehungsweise die Lichterfassungseinrichtung mit dem genannten begrenzten Einfangbereich auf den interessierenden Bildblock der Anzeigeeinheit gerichtet, vorteilhafterweise von einem Randbereich der Anzeigeeinheit her, in welchem Randbereich auch die Beleuchtungseinrichtung angeordnet ist. Insbesondere kann die Lichterfassungseinrichtung den Bildblock der Anzeigeeinheit schräg schleifend unter spitzem Winkel vom Rand der Anzeigeeinheit her beobachten beziehungsweise erfassen, so dass von dem Bildblock schräg zu dem Randbereich hin, in dem die Beleuchtungsvorrichtung angeordnet ist, abgegebenes Licht eingefangen wird.

Insbesondere kann der begrenzte Beobachtungs- beziehungsweise Einfangbereich der Lichterfassungseinrichtung zumindest näherungsweise kongruent mit dem interessierenden Bildblock sein.

Die Lichterfassungseinrichtung kann eine geeignete Optik beispielsweise in Form einer Linse und/oder eines Reflektors aufweisen, um das von dem Bildblock abgegebene Licht in der gewünschten Weise einzufangen und an die Bestimmungseinrichtung weiterleiten zu können. Auf eine solche Linse oder einen solchen Reflektor kann jedoch auch verzichtet sein, wobei das einzufangende Licht, das von dem Bildblock herkommt, unmittelbar in einen Lichtleiter eingekoppelt wird, der einen den Bildblock beobachtenden, vorzugsweise am Rand der Anzeigeeinheit angeordneten Endabschnitt aufweist. Ein solcher Lichtleiter besitzt eine polierte Endoberfläche, um Lichtstrahlen nur unter einem begrenzten Winkel aufzunehmen und dabei Lichtverluste gering zu halten. Alternativ kann an das Lichtleiterende jedoch auch ein Optikelement angeschlossen sein oder damit zusammenwirken, beispielsweise eine den Bildblock beobachtende Linse durch ein Einkoppelgel an den Lichtwellenleiter angeschlossen sein.

In diesen Lichtwellenleiter kann ein vom jeweiligen Bildblock abgegebenes Licht bzw. Lichtspektrum eingekoppelt und mit möglichst geringen Streuverlusten zur Bestimmungseinrichtung übertragen werden. Das übertragene Licht bzw. Lichtspektrum kann dann in der Bestimmungseinrichtung beispielsweise entsprechend in einen Farbinformation umgesetzt und dann entsprechend ausgewertet werden. Damit kann beispielsweise gezielt eine jeweilige Farbinformation des jeweiligen Bildblocks bestimmt werden - idealer Weise mit möglichst geringer Beeinflussung von anderen z.B. benachbarten Bildblöcken. Vorteilhafterweise kann der genannte Lichtwellenleiter ein Bündel von optischen Fasern umfassen, wobei diese optischen Fasern vorzugsweise miteinander verbunden und/oder aneinander befestigt und/oder gebündelt, beispielsweise verklebt sein können. Ein Endabschnitt des Lichtwellenleiters kann dabei dem Bildblock zugewandt sein, um hiervon abgestrahltes Licht einzufangen, während das andere Ende des Lichtwellenleiters mit der Bestimmungseinrichtung verbunden sein kann. Um Lichtverluste gering zu halten, können die Biegeradien des Lichtwellenleiters zwischen den beiden genannten Enden in Abhängigkeit der verwendeten Materialien und Durchmesser der optischen Fasern ausreichend groß gewählt sein.

In vorteilhafter Weiterbildung der Erfindung kann die genannte Lichterfassungseinrichtung, die aus einem Bildblock der Anzeigeeinheit abgegebenes Licht einfängt, in die ergänzende Beleuchtungsvorrichtung, die am Rand der Anzeigeeinheit angeordnet ist, integriert sein beziehungsweise mit dieser Beleuchtungsvorrichtung zu einem vormontierten Modul zusammengefasst sein, so dass sich die Beleuchtungsvorrichtung zusammen mit der Lichterfassungseinrichtung als vormontierte Baugruppe in einfacher Weise an die Anzeigeeinheit montieren lässt. Insbesondere kann der genannte Lichtwellenleiter mit einer Abstrahloptik zusammengefasst sein, welche Abstrahloptik das von der zumindest einen Lichtquelle der Beleuchtungsvorrichtung abgegebene Licht in der gewünschten Weise abstrahlt. Umfasst die genannte Abstrahloptik beispielsweise ein linsenartiges Optikelement aus Kunststoff oder Glas kann der Lichtwellenleiter zumindest abschnittsweise durch den Korpus diese Optikelements hindurch verlaufen, insbesondere in das Material des Optikelements eingegossen sein. Das genannte Optikelement kann hierbei nicht nur als Linse ausgebildet sein, sondern beispielsweise auch eine Streuscheibe umfassen und/oder einen Lichtkondensor beispielsweise in Fresnell-Bauweise aufweisen. Alternativ oder zusätzlich kann die Abstrahloptik auch einen Reflektor umfassen, der einer oder mehreren Lichtquellen der ergänzenden, randseitigen Beleuchtungsvorrichtung zugeordnet sein kann.

Die Module können vorteilhafterweise an ihren Endabschnitten Verbindungsmittel aufweisen, so dass Module hinter- und/oder nebeneinander aneinander gereiht werden können, wobei die Verbindungsmittel mit Kontakten zumindest für die Stromversorgung und/oder für Ansteuersignale versehen sein können. Die Verbindungsmittel können derart sein, dass ein Modul in einem Winkel von vorzugsweise 90° hinzugefügt werden kann und so eine Umrahmung der Anzeige möglich ist, insbesondere also ein Rahmen in einer Ebene parallel zur Anzeigefläche aus miteinander verbundenen Modulen ausbildbar ist. Gegebenenfalls kann an den Ecken auch mit speziellen Modul-Eckstücken gearbeitet werden, die an einander benachbarten Flächen Verbindungs- und/oder Kontaktmittel aufweisen, an denen jeweils eine Reihe anderer Module angeschlossen werden kann.

Die genannte Abstrahloptik kann insbesondere derart beschaffen sein, dass ein sich vorzugsweise aufweitendes Strahlenbündel gerichtet abgegeben wird, dessen Hauptsabstrahlrichtung vorzugsweise auf einen Bedienplatz vor der Anzeigeeinheit gerichtet ist. Das Strahlenbündel kann hierbei je nach Ausbildung der Abstrahloptik ein sich aufweitender Abstrahlkegel sein, oder auch bei einer streifenförmigen Anordnung mehrerer Lichtquellen oder Anordnung einer länglichen Lichtquelle ein sich näherungsweise v-förmig aufweitender Lichtkeil sein. Der Aufweitwinkel eines solchen Abstrahlkegels beziehungsweise -keils kann unterschiedlich gewählt sein, beispielsweise im Bereich von 2 x 45° bis 2 x 80° betragen.

Alternativ oder zusätzlich zu dem genannten Lichtwellenleiter kann auch die Bestimmungseinrichtung und/oder die Farbsteuereinrichtung mit der genannten Abstrahloptik und/oder zumindest einem Leuchtelement der randseitigen, ergänzenden Beleuchtungsvorrichtung zu einer vormontierten Baugruppe zusammengefasst sein, wobei die Bestimmungseinrichtung und/oder die Farbsteuereinrichtung insbesondere im Inneren des Korpus eines Optikelements und/oder eines Versorgungselements der Lichtquelle angeordnet sein kann, insbesondere in das Material einer Linse eingegossen und/oder in eine Leiterplatte, die die Lichtquelle versorgt und/oder ansteuert, integriert sein.

Für die Ansteuerung der Beleuchtungsvorrichtung kann zusätzlich zu dem zumindest einen Bildblock der zumindest einen Anzeigeeinheit und der hieraus gewonnenen Farbinformation auch noch ein weiterer Bildblock derselben oder einer anderen Anzeigeeinheit und/oder das Umgebungslicht, das in einem der Anzeigeeinheit benachbarten Umgebungsbereich auftritt, berücksichtigt werden. Werden beispielsweise mehrere separate Anzeigeeinheiten verwendet, wobei die Beleuchtungsvorrichtung in einem Spalt zwischen den beiden Anzeigeeinheiten angeordnet sein und/oder einen Übergangsbereich zwischen den beiden Anzeigeeinheiten beleuchten kann, kann die Bestimmungseinrichtung zusätzlich zu der ersten Farbinformation aus einem Bildblock der einen Anzeigeeinheit eine zweite Farbinformation aus einem Bildblock der zweiten Anzeigeeinheit bestimmen, wobei die Farbsteuereinrichtung die Farbe und/oder das Farbespektrum des von der Beleuchtungsvorrichtung abgegebenen Lichts in Abhängigkeit sowohl der ersten als auch der zweiten Farbinformation steuern kann. Unabhängig von der Anzahl der verwendet Anzeigeeinheiten kann auch die Farbinformation des Umgebungslichts berücksichtigt werden. Beispielsweise kann zusätzlich zu der Farbinformation aus einem Bildblock der zumindest einen Anzeigeeinheit von der Bestimmungseinrichtung eine Farbinformation des in einem zur Anzeigeeinheit benachbarten Umgebungsbereichs auftretenden Umgebungslichts gewonnen werden, wobei dann die Farbsteuervorrichtung die Farbe und/oder das Farbspektrum des von der Beleuchtungsvorrichtung abgegebenen Zusatzlichts in Abhängigkeit der Farbinformation aus dem Bildblock und der Farbinformation aus dem Umgebungslicht steuern kann.

Hierzu kann in vorteilhafter Weise eine Umgebungslicht-Bestimmungseinrichtung vorgesehen sein, die Umgebungslicht einfängt, wobei diese Umgebungslicht-Bestimmungseinrichtung grundsätzlich analog der Lichtbestimmungseinrichtung, die von einem Bildblock der Anzeigeeinheit abgegebenes Licht einfängt und zuvor beschrieben wurde, ausgebildet sein kann, insbesondere einen entsprechenden Lichtleiter und/oder entsprechende Optikelemente und/oder eine entsprechende Anordnung aufweisen kann. Die Berücksichtigung des Umgebungslichts kann auch bei mehreren separaten Anzeigeeinheiten erfolgen, insbesondere an den seitlichen Rändern der Anzeigeeinheiten, die nicht einer anderen Anzeigeeinheit zugewandt sind.

Insbesondere kann die Farbe des von der Beleuchtungsvorrichtung abgegebenen Lichts aus den vorherrschenden Farben der an den Randbereich angrenzenden Bildblöcke der Anzeigeeinheit bzw. aus den aus den genannten Bildblöcken und/oder den Umgebungsbereichen gewonnenen Farbinformationen zusammengemischt werden. Eine von der Beleuchtungsvorrichtung abgebbare Mischfarbe kann sowohl Farbanteile enthalten, die der Farbinformation aus dem Bildblock der vorgenannten ersten Anzeigeeinheit entsprechen, als auch Farbanteile enthalten, die der Farbinformation aus dem Bildblock der zweiten Anzeigeeinheit und/oder der Farbinformation aus dem Umgebungslicht entsprechen. Die vorgenannte Farbsteuereinrichtung kann hierbei zum Mischen der ersten und zweiten Farbinformationen zu einem Farbsignal eingerichtet sein, wobei die Beleuchtungsvorrichtung zum Abgeben einer Mischfarbe entsprechend dem durch Mischen erzeugten Farbsignal bzw. Mischfarbsignal ausgebildet ist.

Alternativ oder zusätzlich kann die Farbsteuereinrichtung aus den Farbinformationen, die aus den Bildblöcken der verschiedenen Anzeigeeinheiten bestimmt werden, auch mehr als nur ein Farbsignal generieren und mit den verschiedenen Farbsignalen verschiedene Leuchtelemente der Beleuchtungsvorrichtung ansteuern, um eine Farbmischung physikalisch erst auf der Ebene des von den Leuchtelementen abgegebenen Lichts zu erreichen. Genauer gesagt kann aus der ersten Farbinformation ein erstes Farbsignal und aus der zweiten Farbinformation ein zweites Farbsignal bestimmt werden, wobei mit dem ersten Farbsignal ein erstes Leuchtelement der Beleuchtungsvorrichtung und mit dem zweiten Farbsignal ein zweites Leuchtelement der Beleuchtungsvorrichtung angesteuert wird, so dass vom ersten Leuchtelement und vom zweiten Leuchtelement jeweils individuell gefärbtes Licht abgegeben wird. Die Leuchtelemente geben dabei - je nach Farbinformation der jeweils zugeordneten Anzeigeeinheit - insbesondere verschieden gefärbtes Licht ab, welches sich dann zu einem Mischfarblicht durchmischt.

Um durch das von der Beleuchtungsvorrichtung abgegebene Licht einen optisch möglichst nahtlosen Übergang zwischen den zumindest zwei separaten Anzeigeeinheiten zu erreichen, kann die Beleuchtungsvorrichtung in vorteilhafter Weiterbildung der Erfindung zumindest teilweise im Randbereich der zumindest einen Anzeigeeinheit angeordnet sein und eine Hauptabstrahlrichtung besitzen, die von der Anzeigeeinheit weg auf den Betrachter bzw. einen bestimmungsgemäßen Betrachterplatz gerichtet ist bzw. parallel zu einer Hauptabstrahlungsrichtung der zumindest einen Anzeigeeinheit abgegeben wird. Anders als bei bekannten Umfangsbeleuchtungen von Bildschirmen strahlt die Beleuchtungsvorrichtung also vorteilhafterweise nach vorne in einen Bereich vor die Vorderseite der Anzeigeeinheiten, denen die Anzeigeeinheiten selbst mit ihren Anzeigeflächen zugewandt sind und in der ein Betrachter bestimmungsgemäß steht oder sitzt. Hierdurch erhält die Beleuchtungsvorrichtung nicht den Eindruck einer Hintergrundbeleuchtung, sondern bildet eine Vordergrundbeleuchtung.

Vorteilhafterweise kann die Beleuchtungsvorrichtung eine Abstrahloptik zum Erzeugen eines sich in Abstrahlrichtung aufweitenden Strahlenbündels aufweisen, welches Strahlenbündel die zumindest eine Anzeigeeinheit zumindest teilweise überdeckt, vorteilhafterweise einander zugewandte Kantenbereiche von zumindest zwei benachbarten Anzeigeeinheiten zu einer Vorderseite der Anzeigeeinheiten hin überdeckt. Die genannte Abstrahloptik kann beispielsweise eine oder mehrere geeignete Linsen umfassen, die das von zumindest einer Lichtquelle abgegebene Licht einfangen und in Form eines gerichteten Strahlenbündels abstrahlen. Die genannte zumindest eine Linse kann dabei zusätzlich zu der bei LEDs üblichen Primärlinse, die direkt auf dem LED-Element sitzt, vorgesehen sein. Alternativ oder zusätzlich zu einer solchen Linse kann die Abstrahloptik auch zumindest einen Reflektor umfassen, der das von der zumindest einen Lichtquelle abgegebene Licht einfängt und zur Vorderseite der Anzeigeeinheiten in Form des genannten Strahlenbündels abstrahlt. Weiterhin kann die Abstahloptik beispielsweise auch als so genannter Diffusor ausgeführt sein, durch welchen das von der Lichtquelle abgegebene Licht gestreut wird.

Durch die Überdeckung der Kantenbereiche durch das abgegebene Lichtstrahlenbündel sieht der Betrachter der Anzeigeeinheiten zumindest nicht mehr vorrangig die Kantenbereiche der Anzeigeeinheiten, sondern das abgegebene Strahlenbündel der Beleuchtungsvorrichtung, so dass das von der Beleuchtungsvorrichtung abgegebene Licht einen harmonischen Übergang zwischen den Anzeigeeinheiten bzw. zwischen einer Anzeigeeinheit und der Umgebung schaffen kann. Das Lichtstrahlenbündel schlägt sozusagen eine Lichtbrücke zwischen den Anzeigeflächen benachbarter Anzeigeeinheiten bzw. zwischen einer Anzeigeeinheit und der Umgebung und deckt hierbei den Übergangsbereich zwischen den Anzeigeeinheiten bzw. zwischen einer Anzeigeeinheit und der Umgebung ab.

Alternativ oder zusätzlich zu einer nach vorne gerichteten Hauptabstrahlrichtung kann die Abstrahloptik und/oder zumindest eines der Leuchtelemente jedoch auch nach hinten, beispielsweise entgegengesetzt der Abstrahlrichtung der Anzeigeeinheit, und/oder seitlich von der Anzeigeeinheit weg, beispielsweise im wesentlichen in der Ebene der Anzeigeeinheit und/oder quer zur Abstrahlrichtung der Anzeigeeinheit, abstrahlen.

Die zumindest eine Lichtquelle der Beleuchtungsvorrichtung kann hierbei unmittelbar am Rand einer Anzeigeeinheit oder zwischen den Anzeigeeinheiten, insbesondere in einem Spalt zwischen deren beabstandeten Rändern bzw. Kanten angeordnet sein, wobei die Abstrahloptik (z.B. Linse, Linse mit Lichtleiter, Diffusor, etc.) ebenfalls unmittelbar am Rand einer Anzeigeeinheit oder zwischen den Anzeigeeinheiten angeordnet, aber auch dem Randbereich einer Anzeigeeinheit vorgeblendet sein kann. Alternativ kann auch die Lichtquelle selbst vor dem Randbereich einer Anzeigeeinheit angeordnet sein, insbesondere unmittelbar über einem Spalt zwischen zwei Anzeigeeinheiten sitzen oder dem Übergangsbereich zwischen den Anzeigeeinheiten vorgeblendet sein.

Die Beleuchtungsvorrichtung kann dabei grundsätzlich verschiedene Typen von Lichtquellen umfassen, beispielsweise eine stabförmige Leuchtstoffröhre oder ein schmales, längliches Leuchtenband. Alternativ oder zusätzlich kann die Beleuchtungsvorrichtung auch eine Mehrzahl von insbesondere punktförmigen Lichtquellen umfassen, vorzugsweise in Form von LEDs oder RGB-Strahlern, die ein- oder mehrreihig nebeneinander und/oder in einer matrixartigen Anordnung angeordnet sein können.

Insgesamt betrachtet, kann die Anordnung der Lichtquellen der Beleuchtungsvorrichtung und/oder die Kontur der Beleuchtungsvorrichtung insgesamt an den Randbereich einer Anzeigeeinheit, insbesondere an den Übergangsbereich zwischen Anzeigeeinheiten angepasst sein, wobei insbesondere bei einem länglichen, spaltförmigen Übergangsbereich zwischen den Anzeigeeinheiten eine leistenförmige Konturierung der Beleuchtungsvorrichtung vorgesehen sein kann. Hierzu kann beispielsweise eine oder mehrere Reihen von LEDs vorgesehen sein. Die genannten LEDs bzw. die in anderer Weise ausgebildeten punktförmigen Lichtquellen können beispielsweise unmittelbar auf einer Leiterplatine zur Ansteuerung der Lichtquellen sitzen.

Vorteilhafterweise können die genannten Lichtquellen hierbei einzeln oder in Untergruppen von der Steuervorrichtung separat angesteuert werden, insbesondere derart, dass die Lichtstärke der Lichtquellen einzeln bzw. gruppenweise einstellbar ist. Durch eine solche separate Ansteuerbarkeit der Lichtquellen kann beispielsweise der Rotlichtanteil erhöht werden, indem die rot strahlenden Lichtquellen in ihrer Leistungsabgabe bzw. ihrer Lichtstärke hochgefahren werden. In entsprechender Weise kann beispielsweise der Blaulichtanteil reduziert werden, indem die blaues Licht abgebenden Lichtquellen gedimmt bzw. in ihrer Lichtstärke herabgefahren werden.

Bei Verwendung mehrerer Lichtquellen kann dem abgegebenen Strahlenbündel hinsichtlich seiner Farbgebung auch eine gezielte Farbverteilung gegeben werden, beispielsweise dahingehend, dass das abgegebene Strahlenbündel nicht gleichmäßig orangefarbenes Licht abgibt, wenn ein Übergang zwischen einem gelblichen Bildblock auf der ersten Anzeigeeinheit zu einem rötlichen Bildblock auf der ersten oder einer zweiten Anzeigeeinheit geschaffen werden soll, sondern es kann das Strahlenbündel zu der Anzeigeeinheit, deren randseitiger Bildblock gelbliches Licht enthält, mehr gelbes Licht enthalten und zu dem zweiten randseitigen Bildblock, der mehr rötliches Licht enthält, mehr rotes Licht abstrahlen. Eine solche Farbverteilung in dem von der Beleuchtungsvorrichtung abgegebenen Strahlenbündel kann beispielsweise durch geeignete Ausbildung der Abstrahloptik erzielt werden. Den unterschiedlichen Lichtquellen können unterschiedliche Abstrahlrichtungen bzw. Hauptabstrahlrichtungen zugeordnet werden, beispielsweise dergestalt, dass eine obere LED-Reihe leicht nach oben und eine untere LED-Reihe leicht nach unten strahlt, um eine Lichtfarbe mehr einer unteren Anzeigeeinheit und eine andere Lichtfarbe mehr einer oberen Anzeigeeinheit zuordnen zu können. Selbstverständlich können hierbei auch weitere LED-Reihen vorgesehen sein, die überlagernde Hauptabstrahlrichtungen haben. Alternativ oder zusätzlich können auch die vorgenannten unteren und oberen Reihen - oder bei anderer Anordnung entsprechend andere Lichtquellen-Gruppen trotz ihrer unterschiedlichen Hauptabstrahlrichtungen einander überlagerte Strahlungsbündelsegmente bestrahlen, um eine Durchmischung der Farben und einen harmonischen Übergang zu erzielen.

In Weiterbildung der Erfindung kann vorgesehen sein, dass die Beleuchtungsvorrichtung in mehrere Leuchtelemente untergliedert ist, die entlang des Übergangsbereichs einer Anzeigeeinheit und der Umgebung bzw. zwischen zwei benachbarten Anzeigeeinheiten aufgereiht sind und jeweils separat ansteuerbar sind. Hierbei kann den Leuchtelementen jeweils ein eigener Bildblock ggf. zusammen mit einer Umgebungslichtinformation bzw. einem angrenzenden Umgebungsbereich, oder ein eigenes Paar von Bildblöcken zugeordnet sein. Aus diesem Paar von Bildblöcken bzw. einem Bildblock und der Umgebung sind jeweils individuell die ersten und zweiten Farbinformationen gewinnbar, in Abhängigkeit derer das jeweilige Leuchtelement von der Farbsteuereinrichtung ansteuerbar ist. Dementsprechend wird die Farbe oder das Farbspektrum eines jeweiligen Leuchtelements z.B. nicht entsprechend der Durchschnittsfarbe bzw. des Farbspektrums der ganzen Randbereiche der aneinandergrenzenden Anzeigeeinheiten oder z.B. der gesamten Anzeigenfläche der Anzeigeneinheiten gesteuert, sondern nur anhand der vorherrschenden Farbe bzw. Farbspektrums eines Bildblockpaars oder eines Bildblock- und Umgebungsbereichpaars,, das sich unmittelbar in Nachbarschaft zu dem jeweiligen Leuchtelement befindet. Mit anderen Worten bildet ein beispielsweise mittig-zentrales Leuchtelement nur die Farben der mittig-zentralen Bildblöcke ab bzw. nach, während Bildblöcke an rechten und linken Rändern neben den mittig-zentralen Bildblöcken bei der Farbsteuerung der mittig-zentralen Leuchtelemente unberücksichtigt bleiben oder zumindest weniger stark gewichtet werden.

Um eine einfache Montage der Anzeigevorrichtung zu erlauben, können die genannte zumindest eine Anzeigeeinheit und die Beleuchtungsvorrichtung vorzugsweise einschließlich des vorgenannten Lichteinfängers zusammen ein vormontierbares Einbaumodul bilden, das als solches bzw. als vormontierte Einheit in ein gemeinsames Gerätegehäuse einbaubar oder an einen gemeinsamen Wandhalter oder einen gemeinsamen Bodenständer angebaut werden kann. Insbesondere können auch zwei oder mehr Anzeigeeinheiten zusammen mit der im Übergangsbereich zwischen den separaten Anzeigeeinheiten vorgesehenen Beleuchtungsvorrichtung zu einer formstabilen Baugruppe vormontiert werden, die dann in das Gerätegehäuse eingesetzt oder an den Wandhalter bzw. Bodenständer montiert wird.

Die genannten Anzeigeeinheiten können hierbei verschieden ausgebildet und relativ zueinander verschieden positioniert sein. Vorteilhafterweise können beispielsweise zumindest zwei Anzeigeeinheiten zueinander stumpfwinklig geneigt sein, insbesondere derart, dass die einer vorbestimmten Betrachterposition zugewandten Anzeigeflächen der Anzeigeeinheiten zueinander einen Winkel von weniger als 180° einnehmen.

Die genannten Anzeigeeinheiten können dabei im Wesentlichen eben ausgebildete Anzeigeflächen umfassen. Alternativ können die Anzeigeeinheiten aber auch vorzugsweise einachsig gekrümmte Anzeigeflächen besitzen.

Bei einer ebenen Ausbildung der Anzeigeflächen können die Anzeigeeinheiten auch zueinander parallel bzw. in einer gemeinsamen Ebene angeordnet sein. Vorteilhafterweise können die Anzeigeeinheiten zumindest im Bereich ihrer aneinandergrenzenden Randbereiche im selben Abstand von einer vorbestimmten Betrachterposition, d.h. etwa gleich tief im Gerätegehäuse bzw. an einem Halter angeordnet sein.

Die genannten Anzeigeeinheiten können dabei als Bildschirmeinheiten ausgebildet sein, insbesondere als Flachbildschirm beispielsweise in Form eines TFT- oder LCD-Bildschirms.

Die Steuerung oder Regelung der Farbe bzw. des Farbspektrums des abgegebenen Lichts der Beleuchtungsvorrichtung kann dabei grundsätzlich in verschiedener Art und Weise ausgestaltet sein. Gemäß einer vorteilhaften Weiterbildung der Erfindung kann den Bildblöcken der einen oder mehreren Anzeigeeinheiten gemeinsam die zumindest eine Bestimmungseinrichtung zugeordnet sein, die nacheinander zunächst aus einem ersten Bildblock die erste Farbinformation gewinnt und ggf. zwischenspeichert und sodann aus einem zweiten Bildblock derselben oder einer weiteren zweiten Anzeigeeinheit die zweite Farbinformation gewinnt und ggf. wiederum zwischenspeichert. Die Bestimmung der Farbinformationen aus mehreren Anzeigeeinheiten kann hierbei zyklisch abwechselnd wiederholt werden oder bei mehr als zwei Anzeigeeinheiten sozusagen reihum bzw. zyklisch in Reihe nacheinander erfolgen.

Alternativ zu einer solchen gemeinsamen, mehreren Anzeigeeinheiten oder Bildblöcken zugeordneten Bestimmungseinrichtung können auch mehrere Bestimmungseinrichtungen zum Bestimmen der Farbinformationen vorgesehen sein, die zeitparallel und/oder zeitlich überlappend oder auch zeitlich versetzt die Farbinformationen aus den Bildblöcken der einen oder mehreren Anzeigeeinheiten gewinnen bzw. bestimmen. Hierbei können die aus den mehreren Bestimmungseinrichtungen gewonnenen Farbinformationen der Farbsteuereinrichtung zeitlich parallel und/oder zeitlich überlappend oder auch zeitlich versetzt zugeführt werden, um aus den Farbinformationen das Farbsignal zum Ansteuern der Beleuchtungsvorrichtung zu generieren.

Das Farbsignal zum Ansteuern der Beleuchtungsvorrichtung kann insbesondere in der Farbsteuereinrichtung aus den ersten und zweiten und ggf. weiteren Farbinformationen der Bildblöcke der ersten und ggf. weiteren Anzeigeeinheiten und/oder der Umgebung der zumindest einen Anzeigeeinheit zum Farbsignal bzw. zu einem Mischfarbsignal zusammengemischt werden. Das Farbsignal bzw. das Mischfarbsignal kann hierbei beispielsweise mathematisch unter Beachtung zumindest einer vorbestimmten Rechenregel zusammengemischt werden. Beispielsweise können als RGB-Information vorliegende Farbinformationen farbenweise addiert und gemittelt werden. Bei zwei Anzeigeeinheiten, bei denen jeweils ein Bildblock analysiert wird, können beispielsweise ein erster Rotanteil aus dem Bildblock der ersten Anzeigeeinheit und ein Rotlichtanteil aus dem Bildblock der zweiten Anzeigeeinheit aufsummiert und durch zwei dividiert werden, also (R1 + R2)/2, wobei für die Grünlicht- und Blaulichtanteile bzw. -informationen entsprechend vorgegangen wird, also (G1 + G2)/2 und (B1 + B2)/2, so dass aus den gemittelten Farbgrößen eine neue RGB-Information bestimmt werden kann. Analog kann vorgegangen werden, wenn bei nur einer Anzeigeeinheit meherer Bildblöcke oder zusätzlich zu einem Bildblock ein Umgebungsbereich hinsichtlich seiner Lichtfarbe erfasst wird. Alternativ oder zusätzlich können Lichtspektren erfasst und miteinander kombiniert werden, wie dies beispielsweise die DE 10 2007 004 834 A1 zeigt, um ein gewünschtes resultierendes Lichtspektrum zu erzielen.

Das solchermaßen gemischte bzw. gemittelte Farbsignal kann dann von der Farbsteuereinrichtung zur Ansteuerung der Beleuchtungsvorrichtung bzw. deren Lichtquellen verwendet werden. Diese Lichtquellen können dann in Abhängigkeit des erhaltenen Farbsignals ein entsprechendes Licht abgeben.

Alternativ kann das Farbsignal zum Ansteuern der Beleuchtungsvorrichtung insbesondere durch die Mischfunktionalität der Farbsteuereinrichtung auch mit Hilfe von zumindest einer Farbtabelle ermittelt werden. Aus der Farbtabelle kann beispielsweise anhand der Farbinformationen der Bildblöcke der ersten und zweiten und ggf. weiteren Anzeigeeinheiten und/oder eines Umgebungslichtbereichs eine passende Mischfarbe abgeleitet werden, welche dann für das Farbsignal bzw. Mischfarbsignal zum Ansteuern der Beleuchtungsvorrichtung verwendet wird.

Alternativ oder zusätzlich zu einem steuerungstechnischen bzw. mathematischen Mischen der ermittelten Farbinformationen der separaten Anzeigeeinheiten zu einem Mischfarbsignal oder einem Ableiten des Mischfarbsignals mit Hilfe von zumindest einer Farbtabelle, welches dann für die Ansteuerung aller oder einiger Lichtquellen verwendet wird, kann das Mischen der Farbinformationen auch physikalisch erst auf der Stufe der Lichtquellen bzw. des davon abgegebenen Lichts erfolgen. In Weiterbildung der Erfindung kann die bspw. für eine erste Anzeigeeinheit ermittelte erste Farbinformation von der Farbsteuereinrichtung in ein Farbsignal bzw. Farbsteuersignal zum Ansteuern einer ersten Lichtquelle oder einer ersten Untergruppe von Lichtquellen umgesetzt und verwendet werden. Die zweite Farbinformation aus der zweiten Anzeigeeinheit oder der Umgebung der ersten Anzeigeeinheit kann von der genannten Farbsteuereinrichtung in ein zweites Farbsignal bzw. Farbsteuersignal umgesetzt werden, mit dem eine weitere Lichtquelle oder eine weitere Untergruppe von Lichtquellen angesteuert wird. Dementsprechend werden von der Farbsteuereinrichtung verschiedene Lichtquellen bzw. verschiedene Untergruppen von Lichtquellen mit verschiedenen Farbsignalen angesteuert, welche Farbsignale jeweils verschiedenen Farbinformationen entsprechen. Das Zusammenmischen erfolgt dann durch Vermischen des von den verschiedenen Lichtquellen bzw. verschiedenen Untergruppen von Lichtquellen abgestrahlten Lichts.

Wird beispielsweise aus der ersten Anzeigeeinheit die Farbinformation Gelb gewonnen, wird eine erste Untergruppe von Lichtquellen angesteuert, um gelbes Licht abzustrahlen. Wird für die zweite Anzeigeeinheit oder die Umgebung der ersten Anzeigeeinheit als Farbinformation Rot bestimmt, wird eine zweite Untergruppe von Lichtquellen mit einem roten Farbsignal angesteuert, um rötliches Licht abzugeben. Das abgegebene gelbe und das abgegebene rötliche Licht vermischen sich dann zu orangem Licht. Durch eine solche physikalische Lichtmischung kann Rechenkapazität bzw. -leistung eingespart und ggf. ganz auf die zuvor genannten Mischfunktionalität in der Farbsteuereinrichtung verzichtet werden, so dass mit einfachen Steuerungsbausteinen eine rasche Umsetzung einer an die Bilddarstellung der verschiedenen Anzeigeeinheiten und/oder die Umgebung angepassten Beleuchtung erzielt werden kann.

Die Erfindung wird nachfolgend anhand bevorzugter Ausführungsbeispiele und zugehöriger Zeichnungen näher erläutert. In den Zeichnungen zeigen:

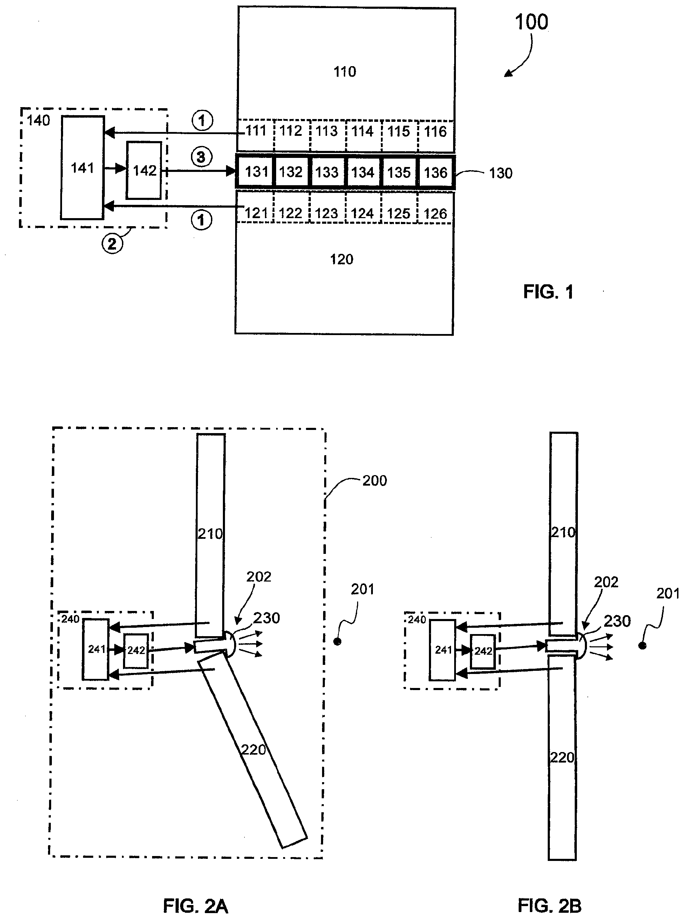

- Fig. 1:: eine schematische Draufsicht auf eine Anzeigevorrichtung nach einer vorteilhaften Ausführung der Erfindung, wobei zwei separate, übereinander angeordnete Anzeigeeinheiten in Form von Bildschirmen vorgesehen sind, zwischen denen eine Beleuchtungsvorrichtung, die aus mehreren Leuchtenbausteinen zusammengesetzt ist, vorgesehen ist, sowie einen beispielhaften Ablauf des Verfahrens zum Betreiben der Anzeigevorrichtung

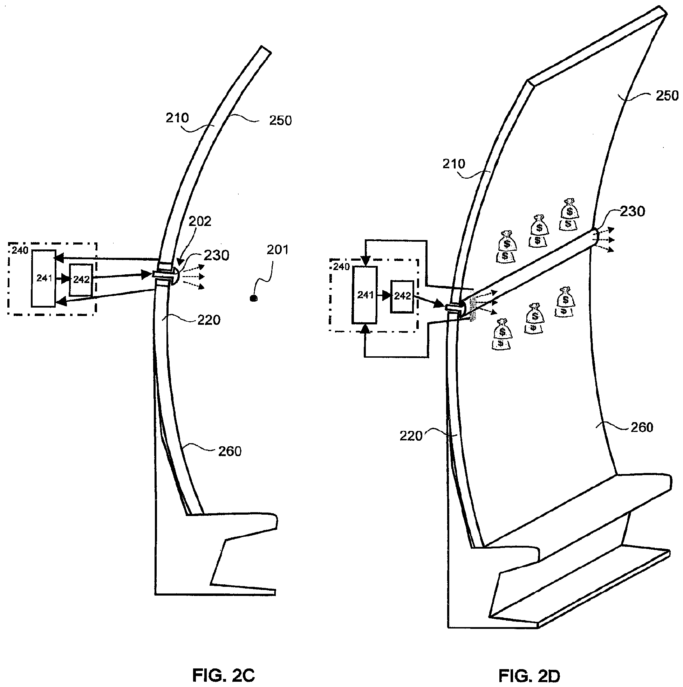

- Fig. 2:: eine Seitenansicht der Anzeigevorrichtung aus Fig. 1 in verschiedenen Ausführungsvarianten, wobei Fig. 2a eine Anzeigevorrichtung mit zwei zueinander stumpfwinklig angeordneten Anzeigeeinheiten zeigt, die mit der im Übergangsbereich angeordneten Beleuchtungsvorrichtung und der zugehörigen Bestimmungseinrichtung wie zugehörigen Farbsteuereinrichtung zum Ansteuern der Beleuchtungsvorrichtung zu einer vormontierten Baugruppe in Form eines zum Einbauen fertigen Einbaumoduls zusammengefasst sind, wobei Fig. 2b eine Anzeigevorrichtung mit zwei separaten, in einer gemeinsamen Ebene angeordneten Anzeigeeinheiten zeigt und wobei Fig. 2c eine Anzeigevorrichtung mit zwei separaten Anzeigeeinheiten, die einachsig gekrümmte Anzeigeflächen besitzen, zeigt,

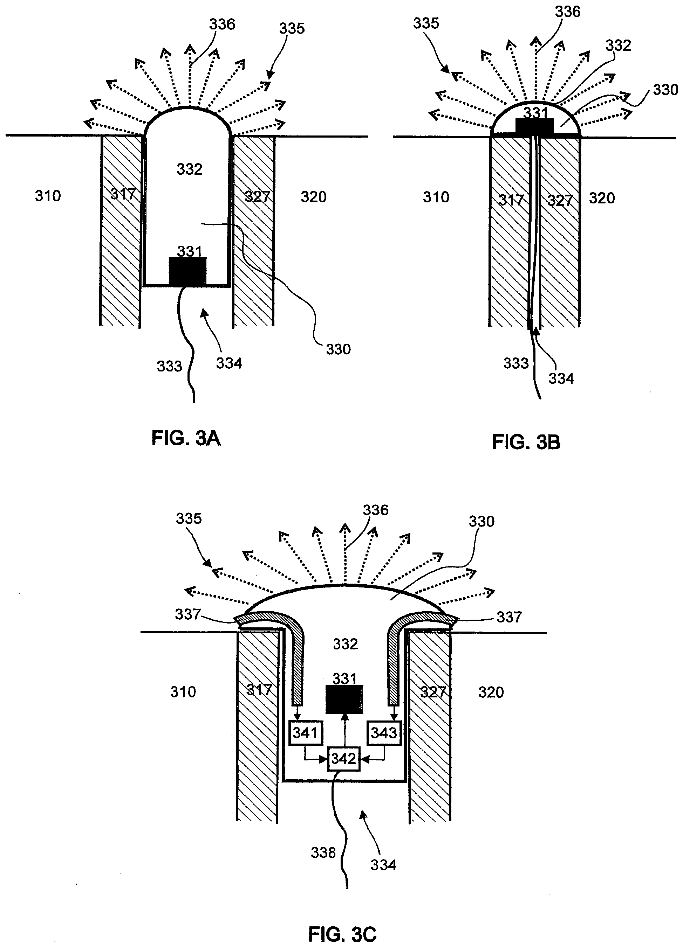

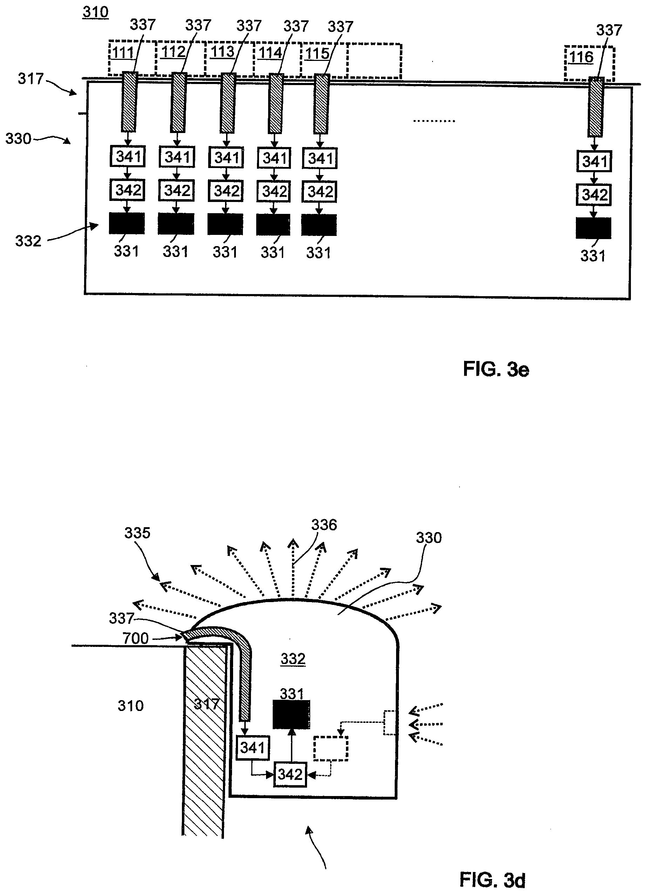

- Fig. 3:: eine ausschnittsweise Schnittansicht der Beleuchtungsvorrichtung und deren Anordnung im Randbereich einer oder zwei Anzeigeeinheiten in verschiedenen Ausführungsvarianten, wobei Fig. 3a eine Ausführung zeigt, bei der die zumindest eine Lichtquelle der Beleuchtungsvorrichtung in einem Spalt zwischen den Rand- bzw. Kantenabschnitten zweier separater Anzeigeeinheiten angeordnet ist und eine Abstrahloptik aus dem Spalt herausragt, um ein sich aufweitendes Strahlenbündel abzugeben, Fig. 3b eine Ausführung zeigt, bei der die zumindest eine Lichtquelle auf der Vorderseite zweier benachbarter Anzeigeeinheiten angeordnet ist und den Spalt bzw. Übergangsbereich zwischen den beiden Anzeigeeinheiten überdeckt und auch die Abstrahloptik die Randbereiche der Anzeigeeinheiten überdeckend angeordnet ist, Fig. 3c eine Ausführung zeigt, bei welcher die zumindest eine Lichtquelle in einem Spalt zwischen den Kantenabschnitten angeordnet ist und die Abstrahloptik die Randbereiche der Anzeigeeinheiten zumindest teilweise überdeckend angeordnet ist, und Fig. 3d eine Ausführung zeigt, bei der zumindest eine Lichtquelle der Beleuchtungsvorrichtung nicht in einem Spalt zwischen zwei Anzeigeeinheiten, sondern am seitlichen Randabschnitt einer Anzeigeeinheit angeordnet ist und den Rand der Anzeigeeinheit zweiseitig, nämlich frontseitig und schmalseitig überlappt und ähnlich der Ausführung nach Fig. 3c einen Lichtleiter hat, der einen an die Lichtquelle angrenzenden Bildblock der Anzeigeeinheit beobachtet und davon abgegebenes Licht einfängt, sowie Fig. 3e eine schematische Darstellung der Anordnung mehrere Lichtwellenleiter der Beleuchtungsvorrichtung aus Fig. 3d, welche Lichtwellenleiter mehreren Bildblöcken der Anzeigeeinheit zugeordnet sind und jeweils mit einer Bestimmungseinrichtung zum Bestimmen einer Farbinformation verbunden sind, welche Bestimmungseinrichtungen wiederum mit einer Farbsteuereinrichtung zum Ansteuern der Leuchtmittel bzw. Lichtquellen der Beleuchtungsvorrichtung verbunden sind,

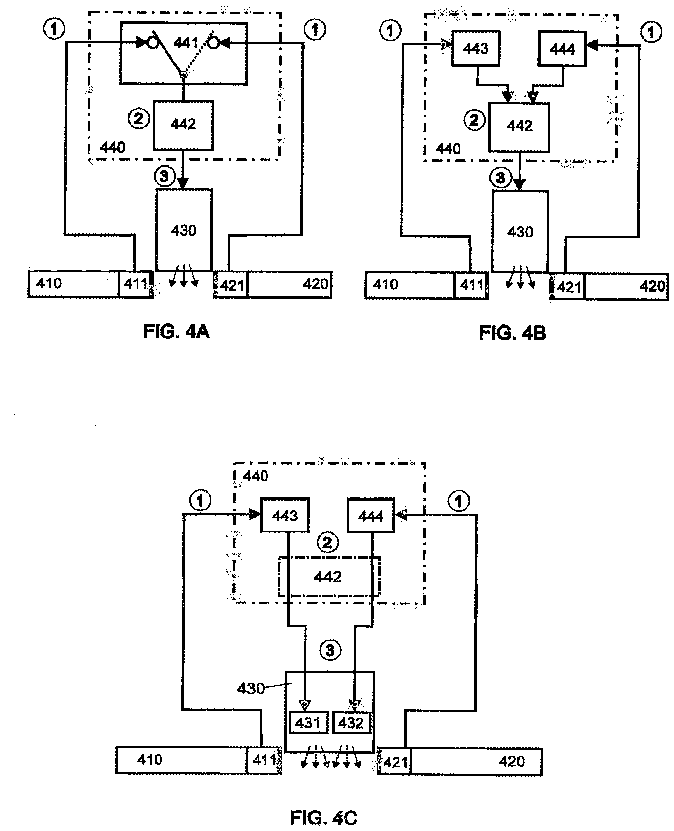

- Fig. 4:: eine schematische und beispielhafte Darstellung des Ablaufs des Verfahrens zum Betreiben der Anzeigevorrichtung in verschiedenen Ausführungsvarianten, wobei Fig. 4a eine Ausführung zeigt, bei der zwei separaten Anzeigeeinheiten eine gemeinsame Bestimmungseinrichtung zum Bestimmen der Farbinformationen aus Bildblöcken der verschiedenen Anzeigeeinheiten zugeordnet ist, und ein Bestimmen der Farbinformationen sequentiell erfolgt, wobei Fig. 4b eine Ausführung zeigt, bei der von den beiden Anzeigeeinheiten jeweils separate Bestimmungseinrichtungen zum Bestimmen der Farbinformation aus einem jeweiligen Bildblock der jeweiligen Anzeigeeinheit verwendet werden und ein Bestimmen der Farbinformationen zeitparallel oder zumindest zeitüberlappend erfolgt, und wobei Fig. 4c eine Ausführung zeigt, bei der jeder Anzeigeeinheit eine Bestimmungseinrichtung zum Bestimmen der Farbinformation zugeordnet ist und die aus den Farbinformationen gewonnenen Farbsignale bzw. Farbsteuersignale separat ohne vorherige mathematische oder steuerungstechnische Mischung zum Ansteuern verschiedener Lichtquellen oder Untergruppen von Lichtquellen der Beleuchtungsvorrichtung genutzt werden, um eine Mischung auf der Stufe des abgegebenen Lichts zu erreichen,

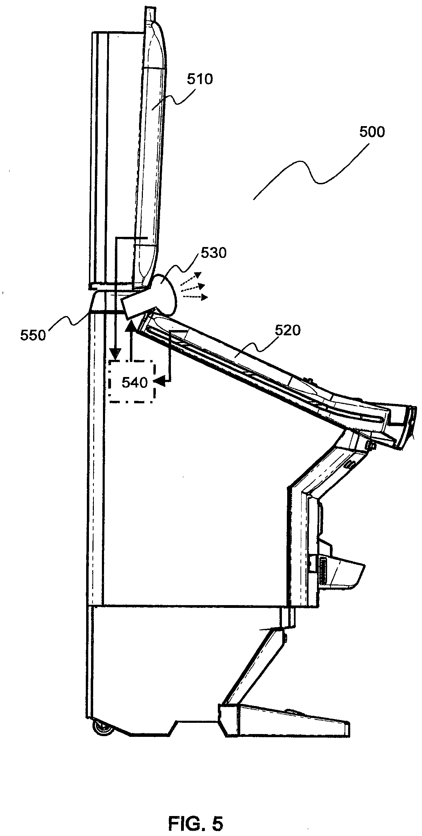

- Fig. 5:: eine schematische, teilweise geschnittene Seitenansicht eines Unterhaltungsautomaten, der zwei zueinander stumpfwinklig geneigt angeordnete Anzeigeeinheiten in Form von Flachbildschirmen aufweist, zwischen denen eine Beleuchtungsvorrichtung der in den vorherigen Figuren gezeigten Art vorgesehen ist, und

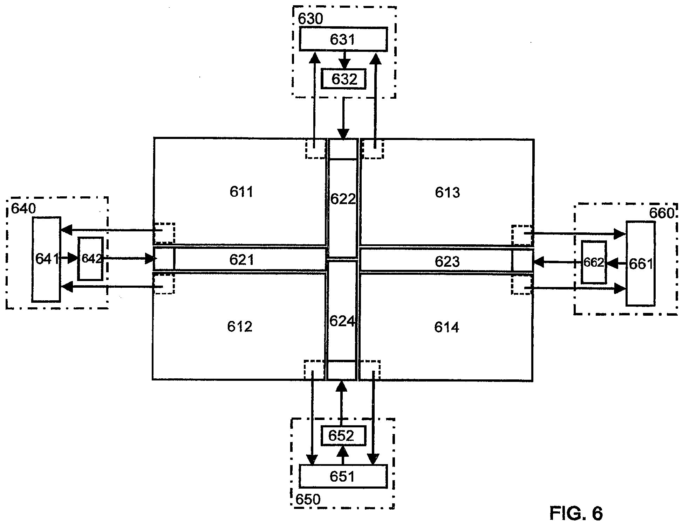

- Fig. 6:: eine Draufsicht auf eine Anzeigevorrichtung mit vier separaten Anzeigeeinheiten, die über und nebeneinander angeordnet sind, um zusammen eine insgesamt rechteckige Anordnung zu ergeben, wobei in den spaltförmigen Zwischenräumen zwischen den Bildschirmen jeweils Leuchtelemente der Beleuchtungsvorrichtung angeordnet sind, die auch in den quadratischen Zwischenraum zwischen den vier Anzeigeeinheiten im Kern der Anordnung hineinragen.

Wie Fig. 1 zeigt, kann die Anzeigevorrichtung 100 zwei separate, eigenständig funktionsfähige Anzeigeeinheiten 110 und 120 umfassen, die als Bildschirme beispielsweise in Form von Flachbildschirmen wie LCD-Bildschirmen oder TFT-Bildschirmen ausgebildet sein können. Die beiden Anzeigeeinheiten 110 und 120 sind zueinander benachbart angeordnet, so dass sich randseitige Kanten der Anzeigeeinheiten 110 und 120 parallel zueinander bzw. Rücken an Rücken erstrecken und zwischen sich einen streifenförmigen Spalt begrenzen.

In diesem Spalt zwischen den randseitigen Kanten bzw. im Übergangsbereich zwischen den beiden Anzeigeeinheiten 110 und 120 ist die Beleuchtungsvorrichtung 130 angeordnet, die insgesamt leistenförmig ausgebildet bzw. an den Übergangsbereich zwischen den Anzeigeeinheiten 110 und 120 angepasst sein kann. Insbesondere kann die Beleuchtungsvorrichtung 130 zumindest teilweise zwischen den randseitigen Kanten der Anzeigeeinheiten 110 und 120 positioniert sein.

Wie Fig. 1 zeigt, kann die Beleuchtungsvorrichtung 130 mehrere Leuchtelemente 131, 132, 133, 134, 135 und 136 umfassen, die zusammen die Beleuchtungsvorrichtung 130 bilden und nebeneinander bzw. in Reihe hintereinander angeordnet sein können. Die genannten Leuchtelemente 131 bis 136 können jeweils zumindest eine Lichtquelle beispielsweise in Form einer LED- oder einer RGB-Einheit, d.h. einer Rot-Grün-Blau-Lichteinheit umfassen. In Weiterbildung der Erfindung kann jedoch jedes der Leuchtelemente 131 bis 136 eine Vielzahl von punktförmigen Lichtquellen umfassen, die ein- oder mehrreihig in einer matrixförmigen Anordnung auf einer Leiterplatine oder in anderer geeigneter Weise angeordnet sein können.

Weiterhin umfasst die in Fig. 1 beispielhaft und schematisch dargestellte Anzeigevorrichtung 100 zumindest einen Bestimmungseinrichtung 141. Mit Hilfe der Bestimmungseinrichtung 141 kann eine erste Farbinformation aus einem Bildblock der ersten Anzeigeeinheit 110 sowie eine zweite Farbinformation aus einem Bildblock der zweiten Anzeigeeinheit 120 bestimmt werden. Weiterhin weist die Anzeigevorrichtung 100 eine Farbsteuereinrichtung 142 auf, mit welcher in Abhängigkeit der ersten und zweiten Farbinformation eine Farbe und/oder ein Farbspektrum des von der Beleuchtungsvorrichtung 130 bzw. von den einzelnen Leuchtelementen 131 bis 136 abgegebenen Lichts gesteuert werden kann. Die zumindest eine Bestimmungseinrichtung 141 und die Farbsteuereinrichtung 142 können beispielsweise funktional zu einer Steuereinheit 140 zusammengefasst sein oder als getrennte funktionale Einheiten ausgeführt sein.

Wie Fig. 2 zeigt, können die Anzeigeeinheiten 110, 120 zueinander unterschiedlich positioniert sein und selbst unterschiedlich konturiert sein. Wie Fig. 2a zeigt, können zwei eben ausgebildete Anzeigeeinheiten 210 und 220 zueinander stumpfwinklig angeordnet sein, so dass die einem Betrachterplatz 201 zugewandten Vorderseiten der Anzeigeeinheiten 210 und 220 zueinander einen Winkel von weniger als 180° einschließen. Beispielsweise kann eine obere Anzeigeeinheit 210 im Wesentlichen vertikal angeordnet sein, während eine untere Anzeigeeinheit 220 zur Vertikalen geneigt angeordnet sein kann, insbesondere mit einem unteren Randabschnitt nach vorne zum Betrachterplatz 201 herausgekippt sein kann. Bei einer solchen stumpfwinkligen Anordnung kann die Beleuchtungsvorrichtung 230 im Bereich der Knickachse zwischen den beiden Anzeigeeinheiten 210 und 220 angeordnet sein, vgl. Fig. 2a.

Eine solche stumpfwinklige Anordnung der Anzeigeeinheiten kann insbesondere vorteilhaft sein, um die Anzeigevorrichtung 100 in ein Gerätegehäuse 550 eines Unterhaltungsautomaten 500 zu integrieren bzw. einzubauen, wie dies Fig. 5 zeigt. In besagter Fig. 5 sind die beiden Anzeigeeinheiten mit 510 und 520 bezeichnet, während die Beleuchtungsvorrichtung mit 530 bezeichnet ist.

Um die Montage der Anzeigevorrichtung 100 zu erleichtern, können die beiden Anzeigeeinheiten 210 und 220 bzw. 510 und 520 zusammen mit der Beleuchtungsvorrichtung 230 bzw. 530 zu einem vormontierten Montagemodul 200 zusammengefasst sein, vgl. Fig. 2a, das eine formstabile und als Einheit handhabbare Baugruppe bildet. Weiterhin können die Bestimmungseinrichtung 241 und die Farbsteuereinrichtung 242 - entweder als getrennte funktionale Einheiten (wie in Fig. 2a beispielhaft dargestellt) oder zusammengefasst in einer Steuereinheit 240 bzw. 540 (wie in Fig. 5 beispielhaft dargestellt) Teil des genannten vormontierten Montagemoduls 200 sein.

Wie Fig. 2b zeigt, können auch zwei ebene Anzeigeeinheiten 210 und 220 in einer gemeinsamen Ebene angeordnet sein, wobei auch hier die Beleuchtungsvorrichtung 230 im Übergangsbereich 202 zwischen den Anzeigeeinheiten 210 und 220 angeordnet sein kann. Selbstverständlich kann auch eine solche nicht abgewinkelte Anordnung der Anzeigeeinheiten 210 und 220 zusammen mit der Beleuchtungsvorrichtung 230, der Bestimmungseinrichtung 241 und der Farbsteuereinrichtung 242 zu einer vormontierten Montagebaugruppe 200 zusammengefasst sein, wobei die Bestimmungseinrichtung 241 und die Farbsteuereinrichtung 241 ebenfalls funktionell zu einer Steuereinheit 240 zusammengefasst sein können.

Wie Fig. 2c bzw. Fig. 2d zeigt, können die Anzeigeeinheiten 210 und 220 auch eine nicht-ebene Ausbildung besitzen, insbesondere eine gewölbte Konturierung besitzen. Die Anzeigeeinheiten 210 und 220 können dabei insbesondere eine einachsig gewölbte Anzeigefläche 250 und 260 besitzen, die zum Betrachterplatz 201 hin konkav gewölbt sein kann, ggf. aber auch eine konvexe Konturierung besitzen kann. Wie Fig. 2c und Fig. 2d zeigt, können die beiden Anzeigeeinheiten 210 und 220 derart zueinander angeordnet sein, dass die gewölbten Anzeigeflächen 250 und 260 einander harmonisch fortsetzen bzw. stetig, stufenfrei aneinander angrenzen, wobei die Anzeigeflächen 250 und 260 zusammen im Schnitt betrachtet eine teilkreisförmige oder teilelliptische oder teilovale Konturierung besitzen können, vgl. Fig. 2c und Fig. 2d.

Die Beleuchtungsvorrichtung 230 kann im Übergangsbereich 202 zwischen den beiden Anzeigeeinheiten 210 und 220 vorgesehen sein und von der Farbsteuereinrichtung 242 angesteuert werden, wobei auch hier eine Zusammenfassung zu einer vormontierten Montagebaugruppe 200 vorgesehen sein kann. Für einen Bestimmung der Farbinformationen ist wiederrum zumindest eine Bestimmungeinrichtung 241 vorgesehen, welche beispielsweise mit der Farbsteuereinrichtung 242 zu einer Steuereinheit 240 zusammengefasst sein kann.

Wie Fig. 3 zeigt, kann die Beleuchtungsvorrichtung in verschiedener Weise im Übergangsbereich 202 zwischen den Anzeigeeinheiten 310, 320 vorgesehen sein. Beispielsweise kann, wie Fig. 3a zeigt, zumindest ein Teil der Beleuchtungsvorrichtung 330 in dem zuvor genannten Spalt 334 zwischen den randseitigen Kanten der Anzeigeeinheiten 310 und 320 angeordnet sein, wobei die genannten randseitigen Kanten von Rahmenteilen 317 und 327 der genannten Anzeigeeinheiten 310 und 320 gebildet sein können. Die genannten Rahmenteile 317 und 327 können beispielsweise den Bildschirmbereich der Anzeigeeinheiten 310 und 320 umfangsseitig einfassen.

Das in Fig. 3a gezeigte Leuchtelement 331 kann beispielsweise einem der in Fig. 1 gezeigten Leuchtelemente 131 bis 136 entsprechen und eine oder mehrere Lichtquellen umfassen. Eine Abstrahloptik 332, die das von der zumindest einen Lichtquelle des Leuchtelements 331 abgegebene Licht einfängt und zu einem Strahlenbündel 335 formt, kann ebenfalls zumindest teilweise zwischen den Anzeigeeinheiten 310 und 320 angeordnet sein, wobei die genannte Abstrahloptik 332 beispielsweise eine Linse und/oder einen Lichtleiter aufweisen kann oder z.B. als Diffusor ausgebildet sein kann. Das von einer Abstrahlfläche der Abstrahloptik 332 abgestrahlte Strahlenbündel 335 besitzt vorteilhafterweise eine Hauptabstrahlrichtung 336, die von der Vorderseite der Anzeigeeinheiten 310 und 320 weg auf den genannten Betrachterplatz 201 gerichtet ist bzw. parallel zu einer Hauptabstrahlungsrichtung der Anzeigeeinheiten 310 und 320 verläuft. Dabei weitet sich das Strahlenbündel 335 so weit auf, dass vom Betrachterplatz 201 her betrachtet das Strahlenbündel 335 die randseitigen Kanten der Anzeigeeinheiten 310 und 320 beispielsweise in Form der Rahmenteile 317 und 327 überdeckt.

Wie Fig. 3b zeigt, kann die Beleuchtungsvorrichtung 330 einschließlich des genannten Leuchtelements 331 auch dem Übergangsbereich bzw. Spalt 334 zwischen den Anzeigeeinheiten 310 und 320 vorgeblendet sein bzw. auf der Vorderseite der genannten Anzeigeeinheiten 310 und 320 angeordnet sein. In diesem Fall kann im Wesentlichen lediglich der Anschluss 333 für die Farbsteuereinrichtung zum Ansteuern der Beleuchtungsvorrichtung 330 durch den Übergangsbereich zwischen den Anzeigeeinheiten 310 und 320 zur Rückseite der genannten Anzeigeeinheiten 310 und 320 herausgeführt sein, vgl. Fig. 3b.

In Fig. 3c ist weiterhin die Beleuchtungsvorrichtung 330 beispielhaft dargestellt, welche das Leuchtelement 331 (z.B. LED, RGB-Einheit, etc.) umfasst. Die Beleuchtungsvorrichtung 330 ist dabei zumindest teilweise im Übergangsbereich bzw. in dem Spalt 334 zwischen den Anzeigeeinheiten 310 und 320 angeordnet, wobei die Abstrahloptik 332, die das von der zumindest einen Lichtquelle des Leuchtelements 331 abgegebene Licht einfängt und zu einem Strahlenbündel 335 formt, zumindest teilweise zwischen den Anzeigeeinheiten 310 und 320 angeordnet sein kann und zumindest teilweise dem Übergangsbereich 334 zwischen den Anzeigeeinheiten 310 und 320 bzw. randseitigen Kanten von Rahmenteilen 317 und 327 der genannten Anzeigeeinheiten 310 und 320 vorgeblendet ist. Weiterhin umfasst - wie Fig. 3c zeigt - die Beleuchtungsvorrichtung 330 zumindest zwei Lichtwellenleiter 337, von welchen eine von den jeweiligen Bildblöcken 111 bis 116 und 121 bis 126 der Anzeigeeinheiten 310 und 320 abgegebene Farbinformation eingefangen und an zumindest eine Bestimmungseinrichtung 342, 343 übertragen wird. Die Lichtwellenleiter 337 sind beispielsweise derart ausgestaltet, dass von ihnen gezielt eine Farbinformation des jeweiligen Bildblocks 111 bis 116 bzw. 121 bis 126 übertragbar ist, welchem der jeweilige Lichtwellenleiter 337 zugeordnet ist. In der Bestimmungseinrichtung 341, 343 kann die vom Lichtwellenleiter übertragene Farbinformation (z.B. vom jeweiligen Bildblock 111 bis 116 bzw. 121 bis 126 abgegebenes Licht bzw. Lichtspektrum) entsprechend umgesetzt und ausgewertet werden. Die ermittelte Farbinformation wird dann an eine Farbsteuereinrichtung 342 weitergeleitet, die von einer Strom-/Spannungsversorgung 338 gespeist wird, und für eine Ansteuerung des Leuchtelements 331 verwendet - vgl. Fig. 3c.

Die Anzeigevorrichtung kann aber grundsätzlich auch nur eine einzige Anzeigeeinheit aufweisen, wie dies bspw. die Fig. 3d und 3e zeigen, wobei die darin dargestellte randseitige Anordnung der ergänzenden Beleuchtungsvorrichtung jedoch grundsätzlich auch bei mehreren Anzeigeeinheiten vorgesehen sein kann, insbesondere in deren Randbereichen, die jeweils keiner anderen Anzeigeeinheit zugewandt sind.

In Fig. 3e ist die Beleuchtungsvorrichtung 330 beispielhaft in einer Draufsicht dargestellt. In Fig. 3d ist weiterhin die Beleuchtungsvorrichtung 330 beispielhaft in einem Querschnitt dargestellt.

Die Beleuchtungsvorrichtung 330 ist zumindest teilweise im Randbereich der Anzeigeeinheit 310 angeordnet. Die Beleuchtungsvorrichtung 330 umfasst zumindest einen Lichtwellenleiter 337 für jeden der jeweiligen Bildblöcke 111 bis 116 der Anzeigeeinheit 310, eine jeweilige Bestimmungseinrichtung 341, eine jeweilige Farbsteuereinrichtung 342 und jeweilige Leuchtelemente 331 (z.B. LED, RGB-Einheit, etc.), vgl. Fig. 3e.

Mit den jeweiligen Lichtwellenleitern 337 werden die von den jeweiligen Bildblöcken 111 bis 116 abgegebene Farbinformation eingefangen und an zumindest eine jeweilige Bestimmungseinrichtung 341 übertragen. Die jeweiligen Lichtwellenleiter 337, die insofern einen Lichteinfänger bzw. eine Lichterfassungseinrichtung 700 bilden, sind beispielsweise derart ausgestaltet, dass von ihnen gezielt eine Farbinformation des jeweiligen Bildblocks 111 bis 116 übertragbar ist, welchem der jeweilige Lichtwellenleiter 337 zugeordnet ist. In der jeweiligen Bestimmungseinrichtung 341 wird die vom jeweiligen Lichtwellenleiter 337 übertragene Farbinformation (z.B. vom jeweiligen Bildblock 111 bis 116 abgegebenes Licht bzw. Lichtspektrum) entsprechend umgesetzt und ausgewertet. Die ermittelte Farbinformation wird dann an eine jeweilige Farbsteuereinrichtung 342 weitergeleitet und für eine Ansteuerung des jeweiligen Leuchtelements 331 verwendet - vgl. Fig. 3e.

Gemäß einem Ausführungsbeispiel können die jeweiligen Lichtwellenleiter 337 aus einem Bündel von optischen Fasern bestehen. Die optischen Fasern sind dabei vorzugsweise miteinander befestigt oder gebündelt (z. B. verklebt), und die Endoberfläche ist poliert, um Lichtstrahlen nur unter einem begrenzten Winkel aufzunehmen. Um Lichtverluste gering zu halten, sind entsprechende Biegeradien in Abhängigkeit der verwendeten Materialien und Durchmesser der optischen Fasern gewählt.

Gemäß einer bevorzugten Ausführungsform können die jeweiligen Lichtwellenleiter 337 aus einem Stück beispielsweise aus PMMA hergestellt sein und dabei eine U-Form bilden und einen Lichtbündel beispielsweise über einen Winkel von 90° gegenüber der Haupt-Abstrahlrichtung der Anzeigeeinheit 310 ablenken. Es kann weiters eine Apertur an einem Ende des Lichtwellenleiters 337 und ein Photodiodensensor oder eine äquivalente Einrichtung an dem anderen Ende des Lichtwellenleiters 337 vorgesehen sein. Der Lichtwellenleiter 337 kann einen nicht gleichförmigen Querschnitt besitzen, um das Licht auf die Lichtaustrittsebene zu konzentrieren.

Lichtstrahlen breiten sich im Lichtwellenleiter über totale interne Reflexion aus. Bei 90°-Winkeln werden die Lichtstrahlen durch reflektierende Flächen reflektiert, welche beispielsweise metallisiert sind, um als Spiegel zu dienen. Die Spiegel bzw. reflektierenden Flächen können insbesondere an den Ecken der U-förmigen Struktur angeordnet sein, beispielsweise als abgeschrägte Flächen unter einem Winkel von z.B. 45° zum Strahlengang.

Die Struktur dieses Lichtwellenleiters 337 ist robust und einfach herzustellen. Es kann erwähnt werden, dass andere Ablenkwinkel realisierbar sind, beispielsweise 50°, 60°, 70°, 80°, 110°.

Weiters kann eine reflektierende Beschichtung direkt oder indirekt (z. B. nicht trennbar oder trennbar) auf der äußeren Oberfläche des Lichtwellenleiters 337 angewendet sein (ausgenommen Flächen, wo Licht ein-(Apertur) oder ausgekoppelt (Lichtaustrittsebene) wird). Der Reflexionskoeffizient eines solchen reflektierenden Beschichtungsmaterials kann 0,9 oder niedriger sein. Die Beschichtung liegt an der Oberfläche des Lichtwellenleiters 337 und kann nicht in diesen eindringen.

Weiters umfasst die Beleuchtungsvorrichtung 330 eine Abstrahloptik 332, die das von der zumindest einen Lichtquelle des Leuchtelements 331 abgegebene Licht einfängt und zu einem Strahlenbündel 335 formt. Gemäß einer Ausführungsform können dabei Leuchtelemente 331 als LED-Reihe auf einem gemeinsamen (stabförmigen, plattenförmigen etc.) Träger angeordnet sein, wobei jede der einzelnen in der Reihe angeordnete LED's eine eigener Kugellinse als Abstrahloptik 332 aufweist. Den jeweiligen Kugellinsen können Licht-Kondensoren in Fresnellbauweise zugeordnet und diesen Kondensoren wiederum eine gemeinsame Streuscheibe zugeordnet sein.

Durch die Anordnung der LED-Reihe und der Kondensoren ist eine homogene, gleichmäßige, symmetrische Ausleuchtung sichergestellt. Alternativ oder zusätzlich können die in einer Reihe nebeneinander angeordneten Leuchtelemente 331 (LED's) und die zugeordneten (und in Reihe ebenfalls nebeneinander angeordneten) Lichtwellenleiter 337 mit einem optisch transparenten Material vergossen sein und das optisch transparente Material dabei die Abstrahloptik 332 bilden. Die Beleuchtungsvorrichtung 330 kann so als ein kopmpaktes LED-Modul ausgebildet sein.

Wie Fig. 3d zeigt, kann das abgestrahlte Strahlenbündel 335 eine Hauptabstrahlrichtung 336 besitzen, die von der Vorderseite der Anzeigeeinheiten 310 und 320 weg auf den genannten Betrachterplatz 201 gerichtet ist bzw. parallel zu einer Hauptabstrahlungsrichtung der Anzeigeeinheiten 310 und 320 verläuft. Dabei - oder auch in Verbindung mit einer anderen Hauptabstrahlrichtung - kann sich das Strahlenbündel 335 so weit aufweiten, dass vom Betrachterplatz 201 her betrachtet das Strahlenbündel 335 die randseitigen Kante der Anzeigeeinheit überdeckt.

Alternativ oder zusätzlich zu einer nach vorne gerichteten Hauptabstrahlrichtung 336 kann die Abstrahloptik 332 und/oder zumindest eines der Leuchtelemente 331 jedoch auch nach hinten, beispielsweise entgegengesetzt der Abstrahlrichtung der Anzeigeeinheit, und/oder seitlich von der Anzeigeeinheit weg, beispielsweise im wesentlichen in der Ebene der Anzeigeeinheit und/oder quer zur Abstrahlrichtung der Anzeigeeinheit, abstrahlen.

Das optisch transparente Material kann insbesondere ein Kunststoff sein, aber z.B. auch Glas. Der Kunststoff ist insbesondere ein Thermoplast, z.B. Polycarbonat (PC), Acrylnitril-Butadien-Styrol-Copolymerisat (ABS), Polymethylmethacrylat (PMMA), ein Cyclo-Olefin-Copolymer (COC), Polymethacrylmethylimid (PMMI) oder eine Mischung einiger oder aller dieser Stoffe.

Der Träger bzw. eine Trägerplatte kann elektrisch leitende und elektrisch isolierende Schichten umfassen, insbesondere zur Stromversorgung der Leuchtelemente 331, Bestimmungseinrichtungen 341 und Farbsteuereinrichtungen 342.

Die Beleuchtungsvorrichtung 330 ist zumindest teilweise im Randbereich 317 der Anzeigeeinheit 310 angeordnet und zumindest teilweise randseitigen Kanten von Rahmenteilen 317 der genannten Anzeigeeinheit 310 vorgeblendet.

Die Beleuchtungsvorrichtung 330 kann in einer weiteren Ausführungsform zumindest einen Umgebungs-Licht-Sensor (Photodetektor, Photodiode) aufweisen, wobei ein Signal des Umgebungs-Licht-Sensors den Bestimmungseinrichtungen 341oder den Farbsteuereinrichtungen 342 zuführbar ist und dabei die Ansteuerung der Leuchtelemente 331 auch in Abhängigkeit des Signals des Umgebungs-LichtSensors erfolgt.

Wie Fig. 6 zeigt, kann die Anzeigevorrichtung 100 auch mehr als zwei Anzeigeeinheiten umfassen, beispielsweise die in Fig. 6 dargestellten vier Anzeigeeinheiten 611, 612, 613 und 614, die paarweise übereinander und nebeneinander positioniert sein können, so dass die Anzeigevorrichtung 100 insgesamt eine rechteckige Konturierung besitzt.

Zwischen den vier Anzeigeeinheiten 611 bis 614 verbleibt ein im Wesentlichen kreuzförmiger Spalt, in dem wiederum Beleuchtungsvorrichtungen 621, 622, 623 und 624 vorgesehen sein können, um die Übergänge der Bilddarstellungen auf den Anzeigeeinheiten 611 bis 614 zu harmonisieren. Die genannten Beleuchtungsvorrichtungen 621 bis 624 können dabei jeweils streifen- bzw. leistenförmig ausgebildet sein bzw. an den Übergangsbereich bzw. den Spalt zwischen den Anzeigeeinheiten 611 und 614 angepasst sein. Hierbei können die genannten Beleuchtungsvorrichtungen 621 bis 624 auch den Zentralbereich des kreuzförmigen Spalts ausfüllen bzw. überdecken, wobei hier zwei Beleuchtungsvorrichtungen 622 und 624 Stoß an Stoß in den Zentralbereich hineinragen können. Alternativ wäre es auch denkbar, beispielsweise durch dreieckförmige Endkonturen alle vier Beleuchtungsvorrichtungen 621 bis 624 diesen Zentralbereich ausfüllen zu lassen.

Wie Fig. 6 zeigt, können für die Beleuchtungsvorrichtungen 621 bis 624 jeweils zumindest eine Bestimmungseinrichtung 631, 641, 651 und 661 zum Bestimmen der jeweiligen Farbinformationen sowie eine Farbsteuereinrichtung 632, 642, 652 und 662 zum Steuern der Farbe bzw. des Farbspektrums der jeweiligen Beleuchtungsvorrichtungen 621 bis 624 vorgesehen sein. Diese Bestimmungseinrichtungen 631, 641, 651 und 661 bzw. die Farbsteuereinrichtungen 632, 642, 652 und 662 können wiederum als getrennte funktionale Einheiten ausgeführt und den jeweiligen Beleuchtungsvorrichtungen 621 bis 624 zugeordnet oder wie in Fig. 6 dargestellt zu Steuereinheiten 630, 640, 650 und 660 zusammengefasst sein. Dabei kann dann beispielsweise jeweils eine Beleuchtungsvorrichtung 621 bis 624 von der jeweiligen zugeordneten Steuereinheit 630, 640, 650, 660 angesteuert werden, welche jeweils mit den entsprechenden Anzeigeeinheiten 611 bis 614 kommuniziert, denen die jeweilige Beleuchtungsvorrichtung 621 bis 624 zugeordnet ist bzw. zwischen deren Übergangsbereich sich die jeweilige Beleuchtungsvorrichtung 621 bis 624 erstreckt.

Zurückkommend auf Fig. 1, kann von der genannten Farbsteuereinrichtung 142, von welcher z.B. gemeinsam mit der zumindest einen Bestimmungseinrichtung 141 eine Steuereinheit 140 gebildet werden kann, jedes der Leuchtelemente 131 bis 136 der Beleuchtungsvorrichtung 130 individuell, d.h. separat und unabhängig von den anderen Leuchtenbausteinen gesteuert werden, wobei ggf. auch eine gruppenweise Ansteuerung vorgesehen sein kann. Mittels des vorgeschlagenen Verfahrens zum Betreiben der Anzeigevorrichtung 100 wird dabei die Farbe und/oder das Farbspektrum des Lichts festgelegt, das von einem jeweiligen Leuchtelement 131 bis 136 abgestrahlt wird. Dabei werden von der Farbsteuereinrichtung 142 Farbinformationen berücksichtigt, von welchen die Farben der Bilddarstellungen auf den Anzeigeeinheiten 110 und 120 berücksichtigt werden.

Genauer gesagt werden für die Ansteuerung eines jeweiligen Leuchtelements 131 Farbinformationen berücksichtigt, die aus Bildblöcken 111 und 121 bestimmt werden. Diese Bildblöcke 111 und 121 erstrecken sich an den Randbereichen der Anzeigeflächen der Anzeigeeinheiten 110 und 120 und grenzen an das jeweiligen Leuchtelement 131 an, vgl. Fig. 1. Hierbei können jedem Leuchtelement 131 bis 136 jeweils separate bzw. individuelle Bildblöcke an dem angrenzenden Rand der Anzeigeeinheiten 110 und 120 zugeordnet sein, wobei die Untergliederung der an die Beleuchtungsvorrichtung 130 angrenzenden Randbereiche der Anzeigeeinheiten 110 und 120 in individuelle Bildblöcke 111 bis 116 sowie 121 bis 126 der Untergliederung der Beleuchtungsvorrichtung 130 in einzelne Leuchtelemente 131 bis 136 entsprechen kann, wie dies in Fig. 1 gezeigt ist. Alternativ könnten die Bildblöcke 111 bis 116 sowie 121 bis 126 jedoch auch eine andere Gliederungsstruktur besitzen, beispielsweise voneinander ein Stück weit beabstandet sein oder einander paarweise ein Stück weit überlappen. Ferner könnte auch beispielsweise jeweils zwei Leuchtelementen 131 bis 136 wie z.B. den Leuchtelementen 132 und 133 nur ein gemeinsamer Bildblock an jeder Anzeigeeinheit 110 und 120 zugeordnet sein. Gegebenenfalls könnte auch nur ein einziger Bildblock entlang jedes Randes der Anzeigeflächen jeder Anzeigeeinheit 110 und 120 angrenzend an die Beleuchtungsvorrichtung 130 vorgesehen sein oder z.B. die gesamte Anzeigefläche jeder Anzeigeeinheit 110 und 120 den auszuwertenden Bildblock bilden. Die in Fig. 1 gezeigte Untergliederung erlaubt jedoch eine bessere Farbanpassung des Lichts der Beleuchtungsvorrichtung 130 an die Farben der Bilddarstellungen der Anzeigeeinheiten 110 und 120 an den an die Beleuchtungsvorrichtung 130 angrenzenden Rändern.

Für eine entsprechende Ansteuerung eines beispielhaften Leuchtelements 131 der Beleuchtungsvorrichtung 130 werden in einem ersten Verfahrensschritt 1 - wie z.B. in Fig. 1 dargestellt - eine erste Farbinformation aus einem jeweiligen an den Übergangsbereich angrenzenden Bildblock 111 eines ersten der zumindest zwei Anzeigeeinheiten 110 und 120 und eine zweite Farbinformation aus einem jeweiligen an den Übergangsbereich angrenzenden Bildblock 121 einer zweiten der zumindest zwei Anzeigeeinheiten 110 und 120 von der genannten zumindest einen Bestimmungseinrichtung 141 bestimmt. Für das Bestimmen der Farbinformation kann einen vom jeweiligen Bildblock 111 bzw. 121 der jeweiligen Anzeigeeinheit 110 bzw. 120 abgegebene Farbinformation (z.B. abgegebenes Licht/Lichtspektrum) mittels Lichtwellenleitern 337 eingefangen bzw. in diese eingekoppelt und an die zumindest eine Bestimmungseinrichtung 141 übertragen werden. Dann wird in einem zweiten Verfahrensschritt 2 zumindest ein Farbsignal in Abhängigkeit der genannten, von der Bestimmungseinrichtung 141 ermittelten ersten und zweiten Farbinformationen gebildet. Dieses zumindest eine Farbsignal wird dann in einem dritten Verfahrensschritt 3 von der genannten Farbsteuereinrichtung 142 eingesetzt, um das Leuchtelement 131 bzw. die Beleuchtungsvorrichtung 130 in Abhängigkeit dieses zumindest einen Farbsignals anzusteuern. Vom Leuchtelement 131 bzw. von der Beleuchtungsvorrichtung 130 wird dann in Abhängigkeit der ermittelten Farbinformationen ein Licht abgegeben, dessen Farbe und/oder Farbspektrum durch das zumindest eine Farbsignal bestimmt wird.

Wie Fig. 4 zeigt, kann beim vorgeschlagenen Verfahren in unterschiedlicher Weise vorgegangen werden. Beispielsweise kann entsprechend Fig. 4a die zumindest eine Bestimmungseinrichtung 441 zum Bestimmen der Farbinformationen für ein Paar oder mehrere Bildblöcke 411 und 421 der beiden separaten Anzeigeeinheiten 410 und 420 eingesetzt werden. Dabei werden im ersten Verfahrensschritt 1 die aus den verschiedenen Bildblöcken 411, 421 kommenden Farbinformationssignale, welche in Lichtwellenleiter 337 eingekoppelt und von diesen zur Bestimmungseinheit 441 übertragen werden, nacheinander an die Bestimmungseinheit 441 gegeben. Dies kann beispielsweise mittels einer Schaltfunktion in der Bestimmungseinheit 441 erzielt werden. Durch diese Schaltfunktion kann beispielsweise zuerst eine erste Farbinformation eines Bildblocks 411 der ersten Anzeigeeinheit 410 bestimmt und ggf. zwischengespeichert werden. Dann kann z.B. eine zweite Farbinformation eines Bildblocks 412 der zweiten Anzeigeeinheit 420 ermittelt und ggf. zwischengespeichert werden.

Diese beiden bestimmten Farbinformationen werden von der Bestimmungseinheit 441 dann im zweiten Verfahrensschritt 2 an die Farbsteuereinrichtung 442 442 weitergeleitet. Dort wird dann aus den beiden Farbinformationen ein Farbsignal bzw. Mischfarbsignal abgeleitet bzw. zusammengemischt. Dieses Mischfarbsignal kann beispielsweise in der bereits erläuterten Weise anhand einer Rechenvorschrift (z.B. als arithmetisches Mittel, etc.) oder mit Hilfe zumindest einer Farbtabelle aus den ermittelten Farbinformationen abgeleitet werden. Das Farbsignal wird dann im dritten Verfahrensschritt 3 von der Farbsteuereinrichtung 442 zur Ansteuerung der Beleuchtungsvorrichtung 430 verwendet, von welcher dann das zusammengemischte Farbsignal in ein Licht umgesetzt wird, dessen Färbung dem diesem Farb- bzw. Mischfarbsignal entspricht.

Fig. 4b zeigt einen weiteren beispielhaften Ablauf des vorgeschlagenen Verfahrens, bei welchem die Farbinformationen aus den Bildblöcken 411 und 421 der Anzeigeeinheiten 410 und 420 zeitparallel bzw. annähernd zeitparallel bestimmt werden können. Dazu sind separate Bestimmungseinheiten 443 und 444 vorgesehen, welche beispielsweise - wie in Fig. 4b dargestellt - den separaten Anzeigeeinheiten 410 und 420 als jeweils eigene Bestimmungseinheit 443 und 444 zugeordnet sind. Dabei wird im ersten Verfahrensschritt 1 beispielsweise von einer ersten Bestimmungseinheit 443, welche der ersten Anzeigeeinheit 410 zugeordnet ist, eine erste Farbinformation eines Bildblocks 411 der ersten Anzeigeeinheit 410 bestimmt. Zeitparallel dazu wird von einer zweiten Bestimmungseinheit 444, welche der zweiten Anzeigeeinheit 420 zugeordnet ist, eine zweite Farbinformation eines Bildblocks 412 der zweiten Anzeigeeinheit 420 ermittelt. Eine Übertragung der Farbinformationssignale an die Bestimmungseinheiten 443, 444 erfolgt dabei mittels Lichtwellenleitern 337

Die von den Bestimmungseinheiten 443 und 444 bestimmten Farbinformationen werden dann im zweiten Verfahrensschritt 2 wiederum an die Farbsteuereinrichtung 442 weitergeleitet, was ggf. wiederum zeitparallel erfolgen kann. Von der Farbsteuereinrichtung wird sodann analog zur Variante der Fig. 4a das Farbsignal bzw. Mischfarbsignal - z.B. mittels Rechenvorschrift oder anhand von zumindest einer Farbtabelle gebildet. Im dritten Verfahrensschritt 3 wird dieses Mischfarbsignal von der Farbsteuereinrichtung 442 an die Beleuchtungsvorrichtung 430 zur entsprechenden Ansteuerung weitergeleitet und von der Beleuchtungsvorrichtung 430 entsprechend umgesetzt.

Fig. 4c zeigt beispielhaft und schematisch eine weitere Variante des Ablaufs des Verfahrens zum Betreiben der Anzeigevorrichtung 100. Hierbei wird ein Mischvorgang physikalisch auf der Ebene der Beleuchtungsvorrichtung 430 ausgeführt. Dazu werden zuerst im ersten Verfahrensschritt 1 von den Bestimmungseinheiten 443 und 444 aus den ihnen zugeordneten Bildblöcken 411 und 421 der jeweiligen Anzeigeeinheiten 410 und 420 die entsprechenden Farbinformationen bestimmt. Diese Farbinformationen werden dann im zweiten Verfahrensschritt 2 in entsprechende Farbsignale umgesetzt. Diese Farbsignale werden dann im dritten Verfahrensschritt 3 von der Farbsteuereinrichtung 442 an separate Untergruppen bzw. separate Leuchtelemente 431 und 432 der Beleuchtungsvorrichtung 430 weitergeleitet, so dass das von dem einen Leuchtelement 431 das Farbsignal umgesetzt wird, das z.B. aus der Farbinformation des Bildblocks 411 der ersten Anzeigeeinheit 410 gewonnen wurde, während vom anderen Leuchtelement 432 das Farbsignal umgesetzt wird, welches aus der Farbinformation des Bildblocks 421 der zweiten Anzeigeeinheit 420 ermittelt wurde.

## Patentansprüche

1. Anzeigevorrichtung (100; 500) zumindest umfassend
- zumindest eine Anzeigeeinheit (110, 120; 210, 220; 310, 320; 410, 420; 510, 520; 611, 612, 613, 614);
- eine Beleuchtungsvorrichtung (130; 230; 330; 430; 530; 621, 622, 623, 624);
- eine Lichterfassungseinrichtung (700) zum Erfassen des von der zumindest einen Anzeigeeinheit (110, 120; 210, 220; 310, 320; 410, 420; 510, 520; 611, 612, 613, 614) in einem Bildblock (111, 112, 113, 114, 115, 116; 411) abgegebenen Lichts;
- zumindest eine Bestimmungseinrichtung (141; 241; 441; 443; 444; 631; 641; 651; 661) zum Bestimmen einer Farbinformation aus dem von der Lichterfassungseinrichtung (700) aus dem Bildblock (111, 112, 113, 114, 115, 116; 411) der zumindest einen Anzeigeeinheit (110; 210; 310; 410; 510; 611, 613) eingefangenen Licht, und
- eine Farbsteuereinrichtung (142; 242; 442; 632; 642; 652; 662) zum Steuern der Farbe und/oder des Farbspektrums des von der Beleuchtungsvorrichtung (130; 230; 330; 430; 530; 621, 622, 623, 624) abgegebenen Lichts in Abhängigkeit der Farbinformation,
**dadurch gekennzeichnet, dass**
die Lichterfassungseinrichtung (700) einen begrenzten Beobachtungsbereich aufweist, der nur einen Bildausschnitt der Anzeigeeinheit erfasst und auf den genannten Bildblock gerichtet ist, und zumindest einen Lichtwellenleiter (337) zum Einfangen des von dem genannten Bildblock abgegegebenen Lichts und zum Übertragen des eingefangenen Lichts an die Bestimmungseinrichtung (341) aufweist, wobei der Lichtwellenleiter (337) einen auf den Bildblock gerichteten Endabschnitt umfasst, welcher Endabschnitt Einkoppelmittel zum Einkoppeln von Licht nur aus dem begrenzten Beobachtungsbereich aufweist, wobei die genannten Einkoppelmittel eine polierte Lichtwellenleiterstirnseite und/oder eine Einfanglinse und/oder einen Einfangreflektor umfassen.

2. Anzeigevorrichtung nach dem vorhergehenden Anspruch, wobei der Lichtwellenleiter (337) zwischen seinen beiden Enden gebogen ausgebildet ist und das eingefangene Licht um einen vorbestimmten Ablenkwinkel gegenüber der Hauptabstrahlrichtung der Anzeigeeinheit (310) ablenkt.

3. Anzeigevorrichtung nach einem der vorhergehenden Ansprüche, wobei der genannte Lichtwellenleiter (337) aus einem Bündel von Lichtleitfasern besteht.

4. Anzeigevorrichtung nach einem der beiden vorhergehenden Ansprüche, wobei die Lichterfassungseinrichtung (700) zumindest abschnittsweise in ein Optikelement einer Abstrahloptik (332) der Beleuchtungsvorrichtung (330) integriert, insbesondere in den Korpus des Optikelements eingegossen ist.

5. Anzeigevorrichtung nach einem der vorhergehenden Ansprüche, wobei die Lichterfassungseinrichtung (700) mit der Beleuchtungsvorrichtung (230; 330) zu einer vormontierten Baugruppe zusammengefasst ist, welche Baugruppe als Einheit an die zumindest eine Anzeigeeinheit (110, 120; 210, 220; 310, 320; 410, 420; 510, 520; 611, 612, 613, 614) anbaubar ist und an einen Randabschnitt der Anzeigeeinheit formangepasste Montage- und/oder Positioniermittel zum Montieren und/oder Positionieren an der Anzeigeeinheit aufweist, wobei die vormontierte Baugruppe an ihren Endabschnitten Verbindungsmittel aufweist, so dass mehrere Baugruppen hinter- und/oder nebeneinander aneinanderreihbar und miteinander verbindbar sind, wobei die Verbindungsmittel vorzugsweise mit Kontakten zumindest für die Stromversorgung und/oder für Änsteuersignale versehen sind und/oder derart ausgebildet sind, dass ein Rahmen in einer Ebene parallel zur Anzeigefläche der Anzeigeeinheit (110, 120; 210, 220; 310, 320; 410, 420; 510, 520; 611, 612, 613, 614) aus miteinander verbundenen Baugruppen ausbildbar ist.

6. Anzeigevorrichtung nach einem der vorhergehenden Ansprüche, wobei der Beobachtungsbereich der Lichterfassungseinrichtung (700) auf den Bildblock (111, 112, 113, 114, 115, 116) begrenzt ist, wobei eine Hauptachse des genannten Beobachtungsbereichs schräg schleifend unter spitzem Winkel vom Rand der Anzeigeeinheit her auf den genannten Bildblock gerichtet ist.

7. Anzeigevorrichtung nach einem der vorhergehenden Ansprüche, wobei die Beleuchtungsvorrichtung (230; 330) zumindest teilweise am Rand der zumindest einen Anzeigeeinheit oder im Übergangsbereich (202) zwischen zumindest zwei Anzeigeeinheiten (210; 220; 310, 320) angeordnet ist und eine Hauptabstrahlrichtung (336) besitzt, die von der Anzeigefläche der zumindest einen Anzeigeeinheit (210; 220; 310, 320) weg auf einen bestimmungsgemäßen Betrachterplatz (201) vor der Anzeigefläche gerichtet ist und/oder parallel zu einer Hauptabstrahlrichtung der zumindest einen Anzeigeeinheit gerichtet ist, wobei die Beleuchtungsvorrichtung (330) eine Abstrahloptik (332) zum Erzeugen eines sich in Abstrahlrichtung aufweitenden Strahlenbündels (335) aufweist, wobei das Strahlenbündel (335) einen Kantenbereich der zumindest einen Anzeigeeinheit, insbesondere einander zugewandte Kantenbereiche zumindest zweier Anzeigeeinheiten (310, 320), zu einer Vorderseite der Anzeigeeinheiten (310, 320) hin zumindest teilweise überdeckt, wobei die Abstrahloptik (332) den Rand der zumindest einen Anzeigeeinheit zweiseitig umgreift, insbesondere eine erste Anlagefläche zum Anliegen an einer Vorderseite der Anzeigeeinheit und eine zweite Anlagefläche zum Anliegen an einer Schmalseite der Anzeigeeinheit umfasst.

8. Anzeigevorrichtung nach einem der vorhergehenden Ansprüche, wobei die zumindest eine Anzeigeeinheit (210, 220) mit der Beleuchtungsvorrichtung (230) ein vormontierbares Einbaumodul (200) bilden, das als vormontierte Einheit in ein gemeinsames Gerätegehäuse (550) einbaubar oder an einen gemeinsamen Wand- oder Bodenhalter anbaubar ist, wobei die Beleuchtungsvorrichtung (130; 230; 330; 430; 530; 621, 622, 623, 624) insgesamt leistenförmig konturiert ist und/oder eine Kontur besitzt, die an einem Randabschnitt der zumindest einen Anzeigeeinheit, insbesondere einen Spalt (334) zwischen zumindest zwei Anzeigeeinheiten (110, 120; 210, 220; 310, 320; 410, 420; 510, 520; 611, 612, 613, 614) formangepasst ist.

9. Anzeigevorrichtung nach einem der vorhergehenden Ansprüche, wobei zumindest zwei Anzeigeeinheiten (210, 220) zueinander stumpfwinklig geneigt sind und/oder zumindest eine Anzeigeeinheit (210, 220) eine vorzugsweise einachsig gekrümmte Anzeigefläche (250, 260) besitzt.

10. Anzeigevorrichtung nach einem der vorhergehenden Ansprüche, wobei die Beleuchtungsvorrichtung eine Mehrzahl von vorzugsweise punktförmigen Lichtquellen, vorzugsweise in Form von LEDs und/oder RGB-Strahlern, umfasst, die ein- oder mehrreihig nebeneinander und/oder in einer Matrixanordnung angeordnet sind, wobei die Lichtquellen einzeln oder in Untergruppen von der Farbsteuereinrichtung (142; 242; 442; 632; 642; 652; 662) separat ansteuerbar sind derart, dass die Lichtstärke und/oder Lichtfarbe der Lichtquellen einzeln oder gruppenweise einstellbar ist.

11. Anzeigevorrichtung nach einem der vorhergehenden Ansprüche, wobei die Beleuchtungsvorrichtung (130) in mehrere Leuchtelemente (131 bis 136) untergliedert ist, die entlang des Randbereichs (202) der zumindest einen Anzeigeeinheit (110; 120) aufgereiht sind, wobei die Leuchtelemente (131 bis 136) von der Farbsteuereinrichtung (142; 242; 442; 632; 642; 652; 662) jeweils separat ansteuerbar sind, wobei den Leuchtelementen (131 bis 136) jeweils ein eigenes Paar von Bildblöcken (111, 121; 112, 122; 113, 123; 114, 124; 115, 125; 116, 126) zugeordnet ist, aus welchem Paar von Bildblöcken jeweils individuell die ersten und zweiten Farbinformationen gewinnbar sind, in Abhängigkeit derer das jeweilige Leuchtenelement von der Farbsteuereinrichtung (142) ansteuerbar ist.

12. Anzeigevorrichtung nach einem der vorhergehenden Ansprüche, wobei die Farbsteuereinrichtung (142; 442) zum Mischen mehrerer Farbinformationen zu einem Mischfarbsignal eingerichtet ist und die Beleuchtungsvorrichtung (130; 430) zum Abgeben einer Mischfarbe entsprechend dem Mischfarbsignal ausgebildet ist.

13. Anzeigevorrichtung nach einem der vorhergehenden Ansprüche, wobei der Bestimmungseinrichtung (441) zum Bestimmen der ersten und zweiten Farbinformationen mehrere Bildblöcke (411; 421) zugeordnet sind, wobei die Bestimmungseinrichtung (441) dazu eingerichtet ist, nacheinander mehrere Bildblöcke (411, 421) auszuwerten, und/oder die Bestimmungseinrichtung (141) mehrere Bestimmungseinheiten (443, 444) aufweist, wobei jeder Bestimmungseinheit (443) jeweils zumindest ein Bildblock (411, 421) zugeordnet ist und von den mehreren Bestimmungseinheiten (443, 444) die Farbinformationen zeitparallel bestimmbar sind.

14. Anzeigevorrichtung nach einem der vorhergehenden Ansprüche, wobei die Beleuchtungsvorrichtung (430) ein erstes Leuchtelement (431) umfasst, das mit einem Farbsignal ansteuerbar ist, das nur in Abhängigkeit einer ersten Farbinformation bestimmt wurde, und ein zweites Leuchtelement (432) umfasst, das mit einem zweiten Farbsignal ansteuerbar ist, das nur in Abhängigkeit einer zweiten Farbinformation bestimmt wurde.

15. Unterhaltungsautomat, insbesondere Glücksspiel- und/oder Wettautomat (500), der zumindest eine Anzeigevorrichtung (100) gemäß einem der vorhergehenden Ansprüche aufweist.

16. Verfahren zum Betreiben einer Anzeigevorrichtung (100), wobei die Anzeigevorrichtung (100) zumindest eine Anzeigeeinheit (110; 120; 410; 420), eine Beleuchtungsvorrichtung (130; 430) zum Beleuchten eines Randbereichs (202) der zumindest einen Anzeigeeinheit (110; 120; 410; 420) aufweist, wobei von zumindest einer Bestimmungseinrichtung (141; 441) eine Farbinformation aus dem von zumindest einem Bildblock (111 bis 116; 411) der zumindest einen Anzeigeeinheit (110; 120; 410; 420) abgegebenen, von einer Lichterfassungseinrichtung (700) eingefangenen Licht (110; 120; 410; 420) bestimmt wird (1), wobei zumindest ein Farbsignal in Abhängigkeit der genannten Farbinformationen gebildet wird (2), und dass mit dem zumindest einen Farbsignal die Beleuchtungsvorrichtung (130; 430) von der Farbsteuereinrichtung (142; 442) angesteuert und von der Beleuchtungsvorrichtung (130; 430) in Abhängigkeit des Farbsignals Licht abgegeben wird, dessen Farbe und/oder Farbspektrum durch das Farbsignal bestimmt wird (3),
**dadurch gekennzeichnet, dass**
die jeweilige Farbinformation der jeweiligen Bildblöcke (111 bis 116; 411; 121 bis 126; 421) von zumindest zwei Anzeigeeinheiten (310, 320) mittels Lichtwellenleitern zu der zumindest einen Bestimmungseinheit übertragen werden, wobei von den Lichtwellenleitern (337) mit an den Endabschnitten der Lichtwellenleiter (337) vorgesehenen Einkoppelmitteln umfassend eine polierte Lichtwellenleiterstirnseite und/oder eine Einfanglinse und/oder einen Einfangreflektor Licht nur aus einem begrenzten Beobachtungsbereich, der auf den jeweiligen Bildblock gerichtet ist, eingekoppelt und somit von der Lichterfassungseinrichtung (700) mit einem begrenzten Beobachtungsbereich, der auf den jeweiligen Bildblock begrenzt ist, gezielt Licht von dem jeweils interessierenden Bildblock eingefangen wird.

17. Verfahren nach dem vorhergehenden Anspruch, wobei das Farbsignal aus ersten und zweiten Farbinformationen, die aus Bildblöcken der Anzeigeeinheit (110; 120: 410; 411) und dem von diesen Bildblöcken jeweils abgegebenem Licht bestimmt werden, in der Farbsteuereinrichtung (142; 442) zusammengemischt wird und als Mischfarbsignal für die Ansteuerung mehrerer Leuchtenbausteine der Beleuchtungsvorrichtung verwendet wird (2, 3), wobei das zumindest eine Farbsignal von der Farbsteuereinrichtung (142; 442) anhand einer Rechenvorschrift aus den Farbinformationen errechnet (2) und/oder anhand einer Farbtabelle bestimmt wird (2).

18. Verfahren nach Anspruch 16, wobei von der zumindest einen Bestimmungseinrichtung (443; 444) eine ersten Farbinformation aus einem ersten Bildblock und eine zweite Farbinformation aus einem zweiten Bildblock bestimmt wird (1), wobei die erste und die zweite Farbinformation in ein erstes Farbsignal und in ein zweites Farbsignal umgesetzt wird (2), wobei mit dem ersten Farbsignal ein erstes Leuchtelement (431) der Beleuchtungsvorrichtung (430) und mit dem zweiten Farbsignal ein zweites Leuchtelement (432) der Beleuchtungsvorrichtung (430) angesteuert wird (2, 3), so dass vom ersten Leuchtelement und vom zweiten Leuchtelement jeweils individuell gefärbtes Licht abgegeben wird.

## Claims

1. A display device (100; 500) at least comprising
- at least one display unit (110; 120; 210, 220; 310, 320; 410, 420; 510, 520; 611, 612, 613, 614);
- an illuminating device (130; 230; 330; 430; 530; 621, 622, 623, 624);
- a light detection device (700) for detecting the light emitted by the at least one display unit (110, 120; 210, 220; 310, 320; 410, 420; 510, 520; 611, 612, 613, 614) in an image block (111, 112, 113, 114, 115, 116; 411),
- at least one determining device (141; 241; 441; 443; 444; 631; 641; 651; 661) for determining a color information from the light captured by the light detection device (700) from the image block (111, 112, 113, 114, 115, 116; 411) of the at least one display unit (110; 210; 310; 410; 510; 611, 613), and
- a color control device (142; 242; 442; 632; 642; 652; 662) for controlling the color and/or the color spectrum of the light emitted by the illuminating device (130; 230; 330; 430; 530; 621, 622, 623, 624) as a function of the color information,
**characterized in that**
the light detection device (700) has a limited observation area which detects only an image section of the display unit and is directed to said image block, and at least one optical waveguide (337) for capturing the light emitted by said image block and for transmitting the captured light to the determining device (341), wherein the optical waveguide (337) comprises an end section directed to the image block, which end section includes coupling means for coupling in light only from the limited observation area, wherein said coupling means comprise a polished optical waveguide front side and/or a capture lens and/or a capture reflector.

2. The display device according to the preceding claim, wherein the optical waveguide (337) is formed bent between its two ends and deflects the captured light by a predetermined angle of deflection with respect to the main emission direction of the display unit (310).

3. The display device according to any of the preceding claims, wherein said optical waveguide (337) consists of a bundle of optical fibers.

4. The display device according to any of the two preceding claims, wherein the light detection device (700) is at least sectionally integrated into an optical element of an emission optics (332) of the illuminating device (330), in particular cast into the body of the optical element.

5. The display device according to any of the preceding claims, wherein the light detection device (700) is combined with the illuminating device (230; 330) to form a pre-mounted assembly, which assembly can be attached as a unit to the at least one display unit (110, 120; 210, 220; 310, 320; 410, 420; 510, 520; 611, 612, 613, 614) and includes mounting and/or positioning means, which are adapted in shape to a border section of the display unit, for mounting and/or positioning on the display unit, wherein the pre-mounted assembly includes connecting means at its end sections so that several assemblies can be arranged one behind the other and/or next to one another in a row and can be connected to each other, wherein the connecting means preferably are provided with contacts at least for the power supply and/or for drive signals and/or are configured such that a frame can be formed in a plane parallel to the display surface of the display unit (110, 120; 210, 220; 310, 320; 410, 420; 510, 520; 611, 612, 513, 614) from interconnected assemblies.

6. The display device according to any of the preceding claims, wherein the observation area of the light detection device (700) is limited to the image block (111, 112, 113, 114, 115, 116), wherein a main axis of said observation area is directed onto said image block obliquely glancing at an acute angle from the border of the display unit.

7. The display device according to any of the preceding claims, wherein the illuminating device (230; 330) is at least partially arranged on the border of the at least one display unit or in the transition area (202) between at least two display units (210; 220; 310, 320) and has a main emission direction (336), which is directed away from the display surface of the at least one display unit (210; 220; 310, 320) onto an intended observation point (201) in front of the display surface and/or is oriented parallel to a main emission direction of the at least one display unit, wherein the illuminating device (330) includes an emission optics (332) for generating a beam bundle (335) widening in the emission direction, wherein the beam bundle (335) at least partially covers an edge area of the at least one display unit, in particular edge areas, which face one another, of at least two display units (310, 320), towards a front side of the display units (310, 320), wherein the emission optics (332) encompasses the edge of the at least one display unit on two sides, in particular a first contact surface for contacting a front side of the display unit and a second contact surface for contacting a narrow side of the display unit.

8. The display device according to any of the preceding claims, wherein the at least one display unit (210, 220) forms a pre-mountable built-in module (200) with the illuminating device (230), which can be installed into a common device housing (550) as pre-mounted unit or which can be attached to a common wall or floor stand, wherein the illuminating device (130; 230; 330; 430; 530; 621, 622, 623, 624) as a whole is contoured in a strip-shaped manner and/or has a contour, which is adapted in shape to a border section of the at least one display unit, in particular a gap (334) between at least two display units (110, 120; 210, 220; 310, 320; 410, 420; 510, 520; 611, 612, 613, 614).

9. The display device according to any of the preceding claims, wherein at least two display units (210, 220) are inclined at an obtuse angle to one another and/or at least one display unit (210, 220) has a preferably uniaxially curved display surface (250, 260).

10. The display device according to any of the preceding claims, wherein the illuminating device comprises a plurality of preferably punctiform light sources, preferably in the form of LEDs and/or RGB emitters, which are arranged next to one another in one or several rows and/or in a matrix arrangement, wherein the light sources can be separately actuated by the color control device (142; 242; 442; 632; 642; 652; 662) individually or in subgroups in such a way that the light intensity and/or light color of the light sources can be adjusted individually or in groups.

11. The display device according to any of the preceding claims, wherein the illuminating device (130) is subdivided into a plurality of light emitting elements (131 to 136), which are lined up along the border area (202) of the at least one display unit (110; 120), wherein the light emitting elements (131 to 136) can in each case be actuated separately by the color control device (142; 242; 442; 632; 642; 652; 662), wherein the light emitting elements (131 to 136) in each case are assigned their own pair of image blocks (111, 121; 112, 122; 113, 123; 114, 124; 115, 125; 116, 126), from which pair of image blocks the first and second color information can in each case be obtained individually, as a function of which the respective light emitting element can be actuated by the color control device (142).

12. The display device according to any of the preceding claims, wherein the color control device (142; 442) is adapted for mixing several items of color information to obtain a mixed color signal and the illuminating device (130; 430) is configured to output a mixed color corresponding to the mixed color signal.

13. The display device according to any of the preceding claims, wherein a plurality of image blocks (411; 421) is assigned to the determining device (441) to determine the first and second color information, wherein the determining device (411) is adapted to evaluate a plurality of image blocks (411, 421) one after the other, and/or the determining device (141) includes a plurality of determining units (443, 444), wherein at least one image block (411, 421) is assigned to each determining unit (443) and the color information can be determined in a temporally parallel manner by the plurality of determining units (443, 444).

14. The display device according to any of the preceding claims, wherein the illuminating device (430) comprises a first light emitting element (431), which can be actuated by means of a color signal, which was determined only as a function of a first color information, and comprises a second light emitting element (432), which can be actuated by means of a second color signal, which was determined only as a function of a second color information.

15. An entertainment machine, in particular gaming and/or betting machine (500), which includes at least one display device (100) according to any of the preceding claims.

16. A method of operating a display device (100), wherein the display device (100) includes at least one display unit (110; 120; 410; 420), an illuminating device (130; 430) for illuminating a border area (202) of the at least one display unit (110; 120; 410; 420), wherein a color information is determined (1) by at least one determining device (141; 441) from the light (110; 120; 410; 420) emitted by the at least one image block (111 to 116; 411) of the at least one display unit (110; 120; 410; 420), which is captured by a light detecting device (700), wherein at least one color signal is formed as a function of said color information (2), and that the illuminating device (130; 430) is actuated by the color control device (142; 442) by means of the at least one color signal and light is emitted by the illuminating device (130; 430) as a function of the color signal, the color and/or color spectrum of which is determined by the color signal (3),
**characterized in that**
the respective color information of the respective image blocks (111 to 116; 411; 121 to 126; 421) of at least two display units (310, 320) is transmitted to the at least one determining unit by means of optical waveguides, wherein by means of coupling means provided at the end sections of the optical waveguides (337), comprising a polished optical waveguide front side and/or a capture lens and/or a capture reflector, light is coupled in by the optical waveguides (337) only from a limited observation area, which is directed onto the respective image block, and thus light is selectively captured from the respective image block of interest by the light detection device (700) having a limited observation area, which is limited to the respective image block.

17. The method according to the preceding claim, wherein the color signal is mixed in the color control device (142; 442) from first and second items of color information, which are determined from image blocks of the display unit (110; 120; 410; 411) and the light emitted by each of these image blocks, and is used (2, 3) as a mixed color signal for actuating a plurality of lamp elements of the illuminating device, wherein the at least one color signal is calculated (2) by the color control device (142; 442) from the color information with reference to a calculation rule and/or determined (2) with reference to a color table.

18. The method according to claim 16, wherein by the at least one determining device (443; 444) a first color information is determined from a first image block and a second color information is determined from a second image block (1), wherein the first and the second color information is converted into a first color signal and into a second color signal (2), wherein by means of the first color signal a first light emitting element (431) of the illuminating device (430) and by means of the second color signal a second light emitting element (432) of the illuminating device (430) is actuated (2, 3) so that individually colored light is emitted each by the first light emitting element and by the second light emitting element.

## Revendications

1. Dispositif d'affichage (100 ; 500) au moins comportant
- au moins une unité d'affichage (110, 120 ; 210, 220 ; 310, 320 ; 410, 420; 510, 520 ; 611, 612, 613, 614) ;
- un dispositif d'éclairage (130 ; 230 ; 330 ; 430 ; 530 ; 621, 622, 623, 624);
- un moyen de détection de lumière (700) pour détecter la lumière émise par ladite au moins une unité d'affichage (110, 120 ; 210, 220 ; 310, 320 ; 410, 420 ; 510, 520 ; 611, 612, 613, 614) dans un bloc d'image (111, 112, 113, 114, 115, 116 ; 411) ;
- au moins un moyen de détermination (141 ; 241 ; 441 ; 443 ; 444 ; 631 ; 641 ; 651 ; 661) pour déterminer une information de couleur à partir de la lumière capturée par ledit moyen de détection de lumière (700) à partir du bloc d'image (111, 112, 113, 114, 115, 116 ; 411) de ladite au moins une unité d'affichage (110 ; 210 ; 310 ; 410 ; 510 ; 611, 613), et
- un moyen de contrôle de couleur (142 ; 242 ; 442 ; 632 ; 642 ; 652 ; 662) pour contrôler la couleur et/ou le spectre de couleurs de la lumière émise par le dispositif d'éclairage (130 ; 230 ; 330 ; 430 ; 530 ; 621, 622, 623, 624) en fonction de l'information de couleur,
**caractérisé en ce que**
ledit moyen de détection de lumière (700) comprend une zone d'observation limitée détectant seulement une partie d'image de ladite unité d'affichage et étant dirigée vers ledit bloc d'image, et au moins un guide d'ondes optiques (337) pour capturer la lumière émise par ledit bloc d'image et transmettre ladite lumière capturée audit moyen de détermination (341), le guide d'ondes optiques (337) comportant une partie d'extrémité dirigée vers le bloc d'image, ladite partie d'extrémité comprenant des moyens de couplage pour coupler la lumière provenant uniquement de la zone d'observation limitée, lesdits moyens de couplage comportant une face d'extrémité polie du guide d'ondes optiques et/ou une lentille de capture et/ou un réflecteur de capture.

2. Dispositif d'affichage selon la revendication précédente, dans lequel le guide d'ondes optiques (337) est formé courbé entre ses deux extrémités et dévie la lumière capturée d'un angle de déviation prédéterminé par rapport à la direction d'émission principale de l'unité d'affichage (310).

3. Dispositif d'affichage selon l'une quelconque des revendications précédentes, dans lequel ledit guide d'ondes optiques (337) comprend un faisceau de fibres optiques.

4. Dispositif d'affichage selon l'une quelconque des deux revendications précédentes, dans lequel le moyen de détection de lumière (700) est intégré au moins par sections dans un élément optique d'une optique d'émission (332) du dispositif d'éclairage (330), en particulier coulé dans le corps de l'élément optique.

5. Dispositif d'affichage selon l'une quelconque des revendications précédentes, dans lequel le moyen de détection de lumière (700) est combiné avec le dispositif d'éclairage (230 ; 330) pour former un ensemble préassemblé, lequel ensemble peut être monté comme unité sur l'au moins une unité d'affichage (110, 120 ; 210, 220 ; 310, 320 ; 410, 420 ; 510, 520 ; 611, 612, 613, 614) et présente des moyens de montage et/ou de positionnement dont la forme est adaptée à une partie de bord de l'unité d'affichage, pour le montage et/ou le positionnement sur l'unité d'affichage, l'ensemble préassemblé présentant des moyens de connexion à ses parties d'extrémité, de sorte que plusieurs ensembles peuvent être disposés les uns derrière les autres et/ou les uns à côté des autres et peuvent être reliés entre eux, les moyens de connexion étant de préférence munis de contacts au moins pour l'alimentation en courant et/ou pour des signaux d'actionnement et/ou étant conçus de telle sorte qu'un cadre peut être formé dans un plan parallèle à la surface d'affichage de l'unité d'affichage (110, 120 ; 210, 220 ; 310, 320 ; 310, 320 ; 210, 220 ; 310, 320 ; 410, 420 ; 510, 520 ; 611, 612, 613, 614) à partir d'ensembles reliés entre eux.

6. Dispositif d'affichage selon l'une quelconque des revendications précédentes, dans lequel la zone d'observation du moyen de détection de lumière (700) est limitée au bloc d'image (111, 112, 113, 114, 115, 116), dans lequel un axe principal de ladite zone d'observation est dirigé obliquement selon un angle aigu depuis le bord de l'unité d'affichage vers ledit bloc d'image.

7. Dispositif d'affichage selon l'une quelconque des revendications précédentes, dans lequel le dispositif d'éclairage (230 ; 330) est disposé au moins partiellement sur le bord de l'au moins une unité d'affichage ou dans la zone de transition (202) entre au moins deux unités d'affichage (210 ; 220 ; 310, 320) et présente une direction d'émission principale (336), qui est dirigée à l'opposé de la surface d'affichage de l'au moins une unité d'affichage (210 ; 220 ; 310, 320) vers une position d'observation (201) prévue devant la surface d'affichage et/ou est orienté en parallèle à une direction d'émission principale de l'au moins une unité d'affichage, le dispositif d'éclairage (330) présentant une optique d'émission (332) pour produire un faisceau (335) s'élargissant dans la direction d'émission, le faisceau (335) recouvrant au moins partiellement une zone de bord de l'au moins une unité d'affichage, en particulier des zones de bord tournées l'une vers l'autre d'au moins deux unités d'affichage (310, 320), vers une face avant des unités d'affichage (310, 320), l'optique d'émission (332) s'engageant sur deux côtés autour du bord de l'au moins une unité d'affichage, en particulier comportant une première surface d'appui pour s'appuyer contre une face avant de l'unité d'affichage et une deuxième surface d'appui pour s'appuyer contre un côté étroit de l'unité d'affichage.

8. Dispositif d'affichage selon l'une quelconque des revendications précédentes, dans lequel l'au moins une unité d'affichage (210, 220) forme un module de montage préassemblable (200) avec le dispositif d'éclairage (230), qui peut être installé comme une unité préassemblée dans un boîtier d'appareil commun (550) ou peut être fixé à un support mural ou un support de fond commun, dans lequel le dispositif d'éclairage (130 ; 230 ; 330 ; 430 ; 530 ; 621, 622, 623, 624) est profilé en forme de barrette en général et/ou présente un contour dont la forme est adaptée à une partie du bord de l'au moins une unité d'affichage, en particulier à un espace (334) entre au moins deux unités d'affichage (110, 120 ; 210, 220 ; 310, 320 ; 410, 420 ; 510, 520 ; 611, 612, 613, 614).

9. Dispositif d'affichage selon l'une quelconque des revendications précédentes, dans lequel au moins deux unités d'affichage (210, 220) sont inclinées l'une par rapport à l'autre selon un angle obtus et/ou au moins une unité d'affichage (210, 220) présente une surface d'affichage (250, 260) de préférence à courbure uniaxiale.

10. Dispositif d'affichage selon l'une quelconque des revendications précédentes, dans lequel le dispositif d'éclairage comporte une pluralité de sources lumineuses de préférence ponctuelles, de préférence sous forme de LED et/ou de spots RGB, qui sont disposées en une ou plusieurs rangées les unes à côté des autres et/ou dans un groupement matriciel, les sources lumineuses pouvant être actionnées séparément, individuellement ou en sous-groupes, par le dispositif de contrôle de couleur (142 ; 242 ; 442 ; 632 ; 642 ; 652 ; 662) de telle sorte que l'intensité lumineuse et/ou la couleur de lumière des sources lumineuses puissent être réglées individuellement ou en groupes.

11. Dispositif d'affichage selon l'une quelconque des revendications précédentes, dans lequel le dispositif d'éclairage (130) est subdivisé en plusieurs éléments lumineux (131 à 136), qui sont alignés le long de la zone de bord (202) de l'au moins une unité d'affichage (110 ; 120), les éléments lumineux (131 à 136) pouvant être actionnés chacun séparément par le moyen de contrôle de couleur (142 ; 242 ; 442 ; 632 ; 642 ; 652 ; 662), leur propre paire de blocs d'image (111, 121 ; 112, 122; 113, 123; 114, 124; 115, 125; 116, 126) étant associée à chacun des éléments lumineux (131 à 136), paire de blocs d'image à partir de laquelle la première et la deuxième information de couleur peuvent être obtenues individuellement dans chaque cas, en fonction de laquelle l'élément lumineux respectif peut être actionné par le moyen de contrôle de couleur (142).

12. Dispositif d'affichage selon l'une quelconque des revendications précédentes, dans lequel le moyen de contrôle de couleur (142 ; 442) est agencé pour mélanger une pluralité d'informations de couleur en un signal de couleur mélangé, et le dispositif d'éclairage (130 ; 430) est conçu pour émettre une couleur mélangée correspondant au signal de couleur mélangé.

13. Dispositif d'affichage selon l'une quelconque des revendications précédentes, dans lequel une pluralité de blocs d'images (411 ; 421) sont associés au moyen de détermination (441) pour déterminer la première et la deuxième information de couleur, le moyen de détermination (441) étant conçu pour évaluer successivement plusieurs blocs d'image (411, 421) et/ou le moyen de détermination (141) présentant plusieurs unités de détermination (443, 444), au moins un bloc d'image (411, 421) étant associé à chaque unité de détermination (443) et l'information de couleur pouvant être déterminée simultanément par les plusieurs unités de détermination (443, 444).

14. Dispositif d'affichage selon l'une quelconque des revendications précédentes, dans lequel le dispositif d'éclairage (430) comporte un premier élément lumineux (431) pouvant être actionné par un signal de couleur déterminé uniquement en fonction d'une première information de couleur, et un deuxième élément lumineux (432) pouvant être actionné par un deuxième signal de couleur déterminé uniquement en fonction d'une deuxième information de couleur.

15. Machine de divertissement, en particulier machine de jeu et/ou de pari (500), comprenant au moins un dispositif d'affichage (100) selon l'une quelconque des revendications précédentes.

16. Procédé de fonctionnement d'un dispositif d'affichage (100), dans lequel le dispositif d'affichage (100) comprend au moins une unité d'affichage (110 ; 120 ; 410 ; 420), un dispositif d'éclairage (130 ; 430) pour éclairer une zone de bord (202) de l'au moins une unité d'affichage (110 ; 120 ; 410 ; 420), dans lequel une information de couleur est déterminée (1) par au moins un moyen de détermination (141 ; 441) à partir de la lumière (110 ; 120 ; 410 ; 420) émise par au moins un bloc d'image (111 à 116 ; 411) de l'au moins une unité d'affichage (110 ; 120 ; 410 ; 420) capturée par un moyen de détection de lumière (700), dans lequel au moins un signal de couleur est formé (2) en fonction desdites informations de couleur, et qu'à l'aide du au moins un signal de couleur le dispositif d'éclairage (130 ; 140) est actionné par le moyen de contrôle de couleur (142 ; 442) et de la lumière est émise par le dispositif d'éclairage (130 ; 430) en fonction du signal de couleur, dont la couleur et/ou le spectre de couleurs est déterminé par le signal de couleur (3),
**caractérisé en ce que**
les informations de couleur des blocs d'image respectifs (111 à 116 ; 411 ; 121 à 126 ; 421) sont transmises d'au moins deux unités d'affichage (310, 320) à l'au moins une unité de détermination au moyen de guides d'ondes optiques, dans lequel la lumière est couplée à partir des guides d'ondes optiques (337) avec des moyens de couplage prévus aux parties d'extrémité des guides d'ondes optiques (337) comportant une face d'extrémité de guide d'ondes optiques polie et/ou une lentille de capture et/ou un réflecteur de capture uniquement à partir d'une zone d'observation limitée, qui est dirigé vers le bloc d'image respectif, et ainsi la lumière du bloc d'image respectif d'intérêt est sélectivement capturée par le moyen de détection de lumière (700) avec une zone d'observation limitée au bloc d'image respectif.

17. Procédé selon la revendication précédente, dans lequel le signal de couleur est mélangé dans le moyen de contrôle de couleur (142 ; 442) à partir d'une première et d'une deuxième information de couleur déterminées à partir de blocs d'image de l'unité d'affichage (110 ; 120 ; 410 ; 411) et de la lumière émise par ces blocs d'image, respectivement, et est utilisé comme signal de couleur mélangé pour actionner une pluralité d'éléments lumineux du dispositif d'éclairage (2, 3), l'au moins un signal de couleur étant calculé (2) par le moyen de contrôle de couleur (142 ; 442) à base d'une règle de calcul à partir des informations de couleur et/ou étant déterminé (2) à base d'un tableau de couleurs.

18. Procédé selon la revendication 16, dans lequel l'au moins un moyen de détermination (443 ; 444) détermine une première information de couleur à partir d'un premier bloc d'image et une deuxième information de couleur à partir d'un deuxième bloc d'image (1), la première et la deuxième information de couleur étant converties en un premier signal de couleur et en un deuxième signal de couleur (2), le premier signal de couleur étant utilisé pour actionner (2, 3) un premier élément lumineux (431) du dispositif d'éclairage (430), et le deuxième signal de couleur étant utilisé pour actionner (2, 3) un deuxième élément lumineux (432) du dispositif d'éclairage (430) de sorte que de la lumière colorée individuellement est émise par le premier élément lumineux et le deuxième élément lumineux, respectivement.
